# EUROPEAN PATENT APPLICATION

(11) **EP 3 617 251 A1**
(43) Date of publication of application: **04.03.2020**
(21) Application number: 18306147.2
(22) Date of filing: 29.08.2018
(51) Int. Cl.: C08G 77/388, C08L 83/08, C08G 65/00, C08L 71/02, C09D 183/08

(54) **THERMOPLASTIC COMPOSITION COMPRISING A POLYSILOXANE BEARING DIAMINOTRIAZINE MOIETIES**

(71) Applicant: RHODIA OPERATIONS, 75009 Paris (FR)
(72) Inventor: LANDELLE, Grégory, 69110 Sainte-Foy-lès-Lyon (FR); AL RAHAL AL ORABI, Rabih, 69006 Lyon (FR); VERGELATI, Caroll, 38118 Saint Baudille de la Tour (FR); TOURAUD, Franck, Eyzin Pinet (FR)
(74) Representative: Roussel, Sandrine

(57) **Abstract**

The present invention relates to a thermoplastic composition comprising at least one polysiloxane (P1) bearing diaminotriazine moieties and at least one polymer (P2) having a glass transition temperature, measured by differential scanning calorimetry, lower than 0 °C, functionalized with at least two isocyanuric or barbituric acid moieties.

## Description

The present invention relates to a thermoplastic composition comprising at least one polysiloxane (P1) bearing diaminotriazine moieties and at least one polymer (P2) having a glass transition temperature, measured by differential scanning calorimetry, lower than 0 °C, functionalized with at least two isocyanuric or barbituric acid moieties.

The presence of H-bond donor and H-bond acceptor moieties onto polymer backbone may result in hydrogen bondings between the polymer chains that may confer new properties to the so formed supramolecular assembly.

US8575291 discloses polydimethylsiloxane (PDMS) bearing functional group having atomic groups capable of forming hydrogen bonding such as thymine group. According to the authors thymine is responsible, through self-association, for hydrogen bondings between the polysiloxane chains leading to the formation of a supramolecular network finally resulting in a thermoplastic silicone resin. The supramolecular assembly is solid at 25°C and becomes liquid at relatively low temperatures of 55°C-65°C. The authors noticed that heating of such supramolecular assembly is often accompanied with a yellowing which is characteristic of thermal degradation detrimental to a reuse of the product. US7622131 discloses PDMS containing self-complementary quadruple hydrogen bonding groups, namely pyrimidine group having an urea link. These polymers are, depending on the nature of the substituent and on the nature of the backbone (telechelic polymer or comblike copolymers), clear sticky, clear elastic, clear glassy or white gummy materials resulting from the reversible association of the polysiloxane chains via hydrogen bondings. Nothing is said about the thermal stability of the urea and of the pyrimidine group.

E.M.Maya et al., disclose the formation of a thermoset polydimethylsiloxane obtained by the cyclotrimerization of a cyanate group to a cyanurate structure. Accordingly, the rubbery material is an irreversibly crosslinked material, having a glass transition ranging from -43°C to 15°C, which can be reuse after melting. US3892643 relates to a thermally curable composition comprising an isocyanuric acid compound such as trialkenyl isocyanurates. Resulting materials are also irreversibly crosslinked.

US20150166847 relates to a thermosetting resin composition including a diglycidyl isocyanuryl modified polysiloxane that may be crosslinked using an acid anhydride-based curing agent. Crosslinking is not reversible and the material is thermoset not thermoplastic.

US4855378 relates to an organopolysiloxane composition which may be crosslinked via an addition of Si-bonded hydrogen with Si-C bonded vinyl groups which can be an alkenylisocyanurate moiety to give elastomeric material. Hydrosilylation reaction is not reversible and the material is thus not thermoplastic.

M.Weck et al. disclose in Macromolecules, 2008, 41 (10), 3429 the synthesis of polynorbonene backbone bearing some isocyanuric acid side groups (ICA). The resulting polymers can be reversibly crosslinked by adding ditopic diaminotriazine (DAT) crosslinking agent to give a gel having elastic properties for temperature as high as 80°C. The association via hydrogen bonds are represented as follow :

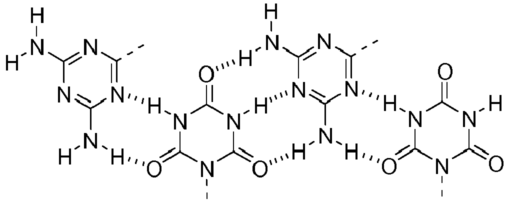

However the values of the modulus measured for these materials are rather low and do not exceeding 10000 Pa.

US4113947 discloses a product obtained by addition of N-allylaminotriazine onto organopolysiloxane. The resulting polsiloxane which bears pendant diaminotriazine group is used in a process for treating fibrous materials. Nothing is said about self-association of such polymer or about H-bond association with polymer bearing complementary H-bond donor-acceptor groups.

US5712391 discloses telechelic polyorganosiloxanes bearing 4,6-bis(ethylamino)-s-triazine on both ends obtained by the reaction between "α, ω-diaminosilicone" and 2-chloro-4,6-bis(ethylamino)-s-triazine. The resulting compound is highly viscous and paste-like. An increase in viscosity is observed when the telechelic polyorganosiloxanes are mixed with "dimethylpolysiloxane". JP2005194378 describes an amino resin obtained from the reaction between (4,6-diamino-1,3,5-triazin-2y1)-benzoic acid and a silicone compound having at least one epoxy group. The authors further disclose a composition comprising the amino resin, which can be cured to improve scratch resistance when used for coating application. The curing process is not reversible and the resulting material is thermoset and not thermoplastic.

According to the previously described prior art, there is a need for a thermoplastic composition comprising a polysiloxane backbone comprising H-bond donor and H-bond acceptor groups not capable of self-association and another polymer bearing complementary H-bond donor and H-bond acceptor groups capable of giving supramolecular association when mixed with said polysiloxane. There is a need for a thermoplastic composition comprising a polysiloxane backbone comprising H-bond donor and H-bond acceptor groups capable of giving reversible hydrogen bonding when mixed with a polymer backbone bearing complementary H-bond donor and H-bond acceptor groups to give a thermoplastic material having a large range of temperature of use. There is a need for a thermoplastic composition comprising a polysiloxane backbone comprising H-bond donor and H-bond acceptor groups and another polymer bearing complementary H-bond donor and H-bond acceptor groups which gives a thermoplastic material having a range of temperature of use that can be tune easily.There is a need for such material having high thermal stability. There is a need for such material that is inherently self-healing material.

All these needs and other are fulfilled by a thermoplastic composition comprising :
- at least one polysiloxane (P1) chosen from polysiloxanes corresponding to formula (A) and polysiloxanes corresponding to formula (B), with formulae (A) and (B) as represented hereinafter : 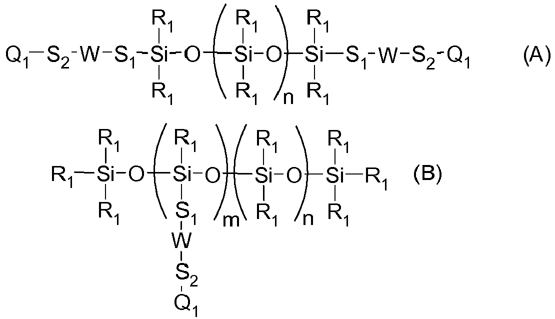
   wherein each R₁ is independently selected from C₁-C₂₀ hydrocarbyl groups optionally substituted by a perfluoroalkyl group,
   wherein S₁ and S₂ which may be the same or different are nil or C₁-C₄₀ hydrocarbylene groups optionally interrupted by one or more heteroatoms or heteroatom-containing groups chosen from the list consisting of -O-, -S-,-(C=O)-, -(C=S)-,-CO-NH-, -NH-CO-O- and -NH-CO-NH-,
   wherein W is a divalent group selected from the list consisting of -NH-, -NR-,-CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O-, -*O(C=O)-, -*NH-CO-O-, -NH-CO-O*-
   and -NH-CO-NH- wherein the atom designed with * is linked to S₁ and wherein R is a C₁-C₈ alkyl group,
   wherein Q₁ is a diaminotriazine moiety corresponding to formula (C): 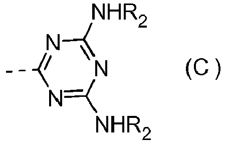
   wherein R₂ is independently H or a C₁-C₂₀ hydrocarbyl group or a -(C=O)-R' moiety with R' being a C₁-C₂₀ hydrocarbyl group,
   wherein n is an integer ranging from 5 to 2000 and,
   wherein m is an integer such as the ratio n/m is ranging from 500 to 2, and
- at least one polymer (P2) having a glass transition temperature, measured by differential scanning calorimetry, lower than 0 °C,
   said polymer (P2) being a polymer functionalized with at least two isocyanuric or barbituric acid moieties corresponding to formula (D): 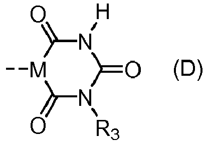 wherein 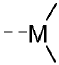 is 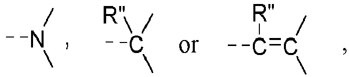
   wherein R" is H or a C₁-C₈ alkyl group and,
   wherein R₃ is H or a C₁-C₂₀ hydrocarbyl group or a -(C=O)-R"' moiety with R'" being a C₁-C₂₀ hydrocarbyl group.

### Nature of polysiloxane (P1)

Each R₁ is independently selected from C₁-C₂₀ hydrocarbyl groups. In some embodiments, each R₁ is independently selected from C₁-C₂₀ hydrocarbyl groups optionally substituted by a perfluoroalkyl group. By hydrocarbyl group is meant univalent group comprising only carbon and hydrogen atoms formed by removing a hydrogen atom from a hydrocarbon. The hydrocarbyl group can be saturated or unsaturated, linear, branched or cyclic. When the hydrocarbyl group is cyclic it may be an aryl group formed by removing a hydrogen atom from an aromatic hydrocarbon i.e. from a cyclic conjugated unsaturated hydrocarbon ring having a number of delocalized π electrons following the Huckel rule. By perfluoroalkyl group is meant any alkyl group in which each H atom is replaced by F atom. Hydrocarbyl group R₁ is advantageously an alkyl or an aryl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl, dodecyl, tetradecyl, hexadecyl and octadecyl groups. Suitable aryl groups may be optionally substituted phenyl group. Good results were obtained with R₁ being phenyl group. In a preferred embodiment R₁ is an alkyl group and more preferably a methyl group.
Just as matter of example the polysiloxanes represented in figures **(I)** to **(XVIII)** below are examples of polysiloxane (P1) according to the present invention : 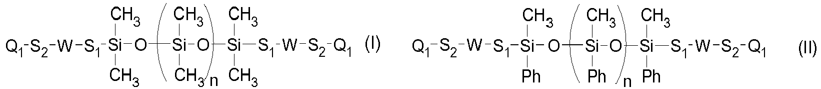 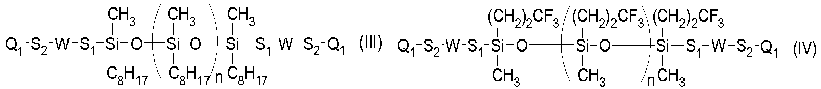 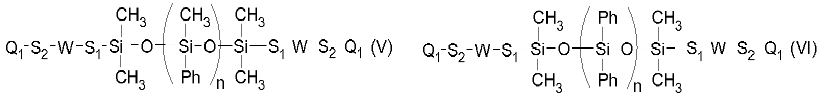 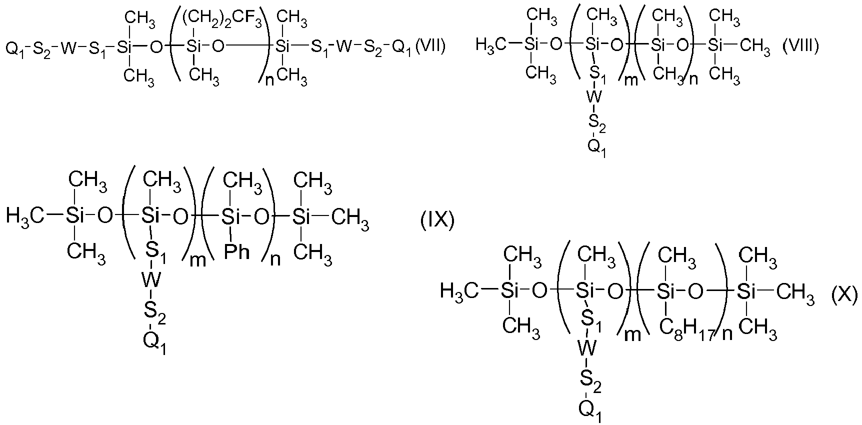 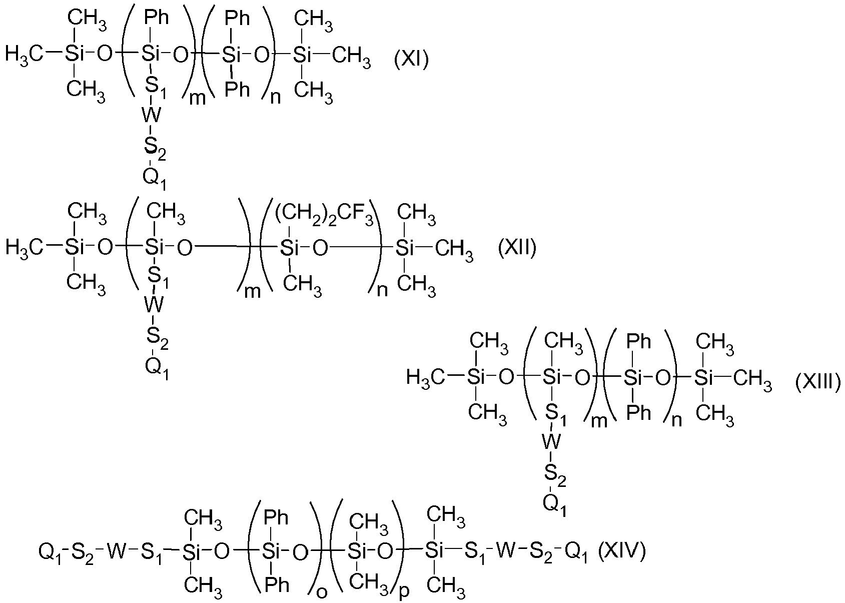 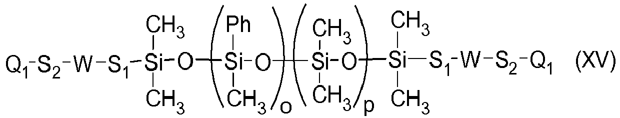 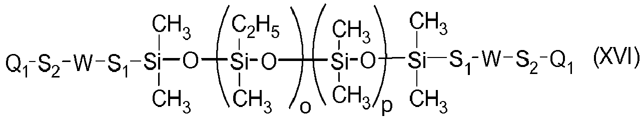 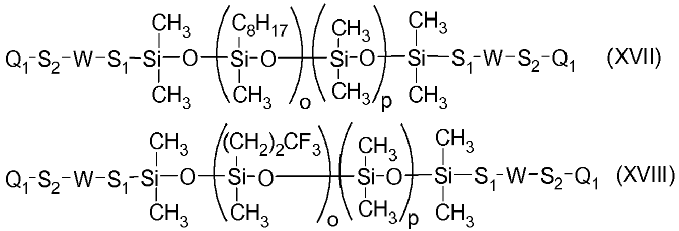 wherein for polysiloxanes according to figures (XIV) to (XVIII) o and p are integers such that o + p = n, with n as defined above.

S₁ is generally nil or a C₁-C₄₀ hydrocarbylene group optionally interrupted by one or more heteroatoms or heteroatom-containing groups. One has to understand that when S₁ is nil means that S₁ has to be replaced by a single bond in the corresponding formula. By hydrocarbylene group is meant divalent group comprising only carbon and hydrogen atoms formed by removing two hydrogen atoms from a hydrocarbon, the free valencies of which are not involved in a double bond. The hydrocarbylene group can be saturated or unsaturated, linear, branched or cyclic. When the hydrocarbylene group is cyclic it may be an aryl group formed by removing two hydrogen atoms from an aromatic ring i.e. from a cyclic conjugated unsaturated hydrocarbon ring having a number of delocalized π electrons following the Huckel rule. The term aromatic ring encompasses also polycyclic aromatic compounds. In the polycyclic aromatic compounds, the rings can be fused or they can be linked by C-C linkage or by a spiro linkage. When the hydrocarbylene group is interrupted by one or more heteroatoms or heteroatom-containing groups it can be interrupted by one or more ether linkage -O-, one or more thioether linkage -S-, one or more carbonyl linkage -(C=O)-, one or more thiocarbonyl linkage -(C=S)-, one or more amide linkage -CO-NH-, one or more carbamate linkage -NH-CO-O- or one or more urea linkage -NH-CO-NH-.

S₁ is preferably nil or a C₁-C₄₀ hydrocarbylene group, more preferably S₁ is nil or -(CH₂)_{q}- with q ranging from 1 to 12, even more preferably S₁ is nil or -(CH₂)₃- and most preferably S₃ is -(CH₂)₃-.

S₂ is generally nil or a C₁-C₄₀ hydrocarbylene group optionally interrupted by one or more heteroatoms or heteroatom-containing groups chosen from the list consisting of -O-, -S-, -(C=O)-, -(C=S)-,-CO-NH-, -NH-CO-O- and -NH-CO-NH-.

S₂ is preferably nil or -(CH₂)_{q}- with q ranging from 1 to 12, more preferably S₂ is nil or -(CH₂)₃- and even more preferably S₂ is nil.

W is a divalent group generally selected from the list consisting of -NH-, -NR-,-CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O-, -*O(C=O)-, -*NH-CO-O-, -NH-CO-O*- and -NH-CO-NH-. W is preferably selected from -NH-, -NR-, -CH₂-CH₂-, -*S-CH₂-CH₂-, -*CH₂-CH₂-S-, -*NH(C=O)-, -(*C=O)NH-, -*NR(C=O)- and-(*C=O)NR-, more preferably selected from -NH-, -NR-, -CH₂-CH₂-, -*S-CH₂-CH₂- and *NH(C=O)-. Good results were obtained with W being -NH-.

R₂ is generally H or a C₁-C₂₀ hydrocarbyl group or a -(C=O)-R' moiety with R' being a C₁-C₂₀ hydrocarbyl group. R₂ is preferably H or a C₁-C₂₀ hydrocarbyl group. In some embodiments, R₂ is a -(C=O)-R' moiety with R' being a C₁-C₂₀ hydrocarbyl group. When R₂ is a -(C=O)-R' moiety, it is preferably an acetyl moiety -CO-CH₃. Good results were obtained with R₂ equal to H.

In some still preferred embodiments, R₂ is H, W is -NH-, S₁ is -(CH₂)₃- and S₂ is nil while R₁ is as previously defined.

In some still preferred embodiments, R₂ is H, W is -NH-, S₁ is -(CH₂)₃- and S₂ is nil while R₁ is -CH₃.

Just for the sake of example the polysiloxane (P1) may be the polydimethylsiloxane (PDMS) of formula (A₁) or (B₁) as represented below:

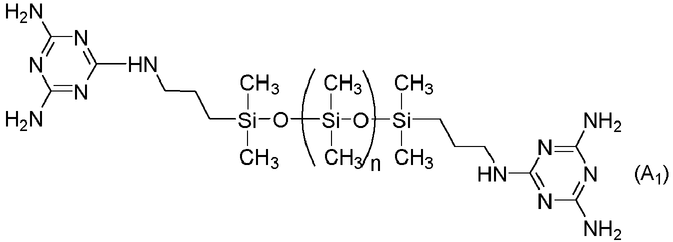

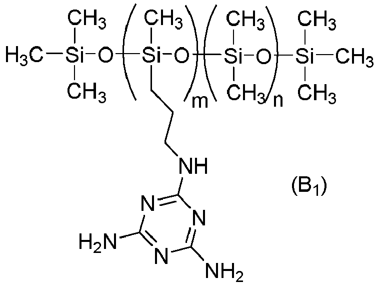

Preferably, the polysiloxane (P1) according to the invention is a telechelic PDMS corresponding to formula (A₁) the synthesis of which is described later in the experimental part.

For the polysiloxane (P1), n represents an average number of repeating units that can be determined by NMR spectroscopy by a method well known by the skilled person and that will be described in the experimental part.

Generally, n is an integer at least equal to 5, preferably at least equal to 7, more preferably at least equal to 10 and even more preferably at least equal to 12. Besides, n is an integer at most equal to 4000, preferably at most equal to 2000, more preferably at most equal to 1000 and even more preferably at most equal to 200.

Generally, n is ranging from 5 to 4000. Preferably n is ranging from 7 to 2000, more preferably from 10 to 1000 and even more preferably from 12 to 200.

For the polysiloxane (P1) responding to formula (B) m represents an average number of repeating units that can be determined by NMR spectroscopy. Generally, m is an integer such as the ratio n/m is ranging from 500 to 2, preferably from 100 to 4 and more preferably from 50 to 6.

Without being bond by any theory, the polysiloxane (P1) bearing diaminotriazine moieties is capable of giving supramolecular association via H-bond interactions when mixed with polymer (P2) bearing complementary cyanuric or barbituric acid. The composition comprising such polymers generally results in a thermally reversible supramolecular network and in a material exhibiting thermoplastic behavior in a temperature range generally reaching temperature well above room temperature. Accordingly, the composition generally gives a solid material at room temperature that can be soften by heating and even liquefied when the temperature reached is enough to break all the intermolecular H-bonds responsible for supramolecular association.

Functionalized polysiloxane (P1) also exhibit a high thermal stability and do not degrade up to 220°C.

### Nature of polymer (P2)

The polymer (P2) has a glass transition temperature, measured by differential scanning calorimetry, which is generally lower than 0°C. In some embodiments, the glass transition of polymer (P2) is lower than -50 °C. In some other embodiments the glass transition of polymer (P2) is lower than -100 °C.

Just for the sake of example, the polymer (P2) functionalized with at least two isocyanuric or barbituric acid moieties is generally selected from the list of functionalized polymers consisting of functionalized Poly(vinylidene chloride) (PVDC), Poly(vinylidene fluoride) (PVDF), Polychloroprene (Neoprene®), Poly(2-ethylhexyl acrylate), Poly(2,2,3,3-tetrafluoropropyl acrylate), Poly(4-cyanobutyl acrylate), Poly(butyl acrylate), Poly(dodecyl acrylate), Poly(ethyl acrylate), Poly(hexyl acrylate), Poly(isobutylyl acrylate), Poly(isopropyl acrylate), Poly(nonyl acrylate), Poly(propyl acrylate), Poly(sec-butyl acrylate), Poly(dodecyl acrylate), Poly(1-butene), Poly(1-octene), Poly(1-pentene), Poly(ethylene), Poly(isobutene), Poly(propylene), Poly(1,2-butadiene), Poly(1,4-butadiene), Poly(1-pentenylene), Poly(1-methyl-1-butenylene) (Polyisoprene), Poly(1,4-butylene adipate), Poly(1,4-butylene succinate), Poly(1,4-butylene sebacate), Poly(caprolactone), Poly(ethylene adipate), Poly(neopentyl glycol succinate), Poly(dipropyl fumarate), Poly(3-hexoxypropylene oxide), Poly(1-chloromethyl)ethylene oxide), Poly(epichlorohydrin), Poly(ethylene oxide) (PEO), Poly(propylene oxide) (PPO), Poly(tetrahydrofuran), Poly(trimethylene oxide), Poly(tetramethylene oxide), Poly(methylene oxide) (POM), Poly(decyl methacrylate), Poly(dodecyl methacrylate), Poly(hexyl methacrylate), Poly(octyl methacrylate), Poly(ethylene sulfide), Poly(propylene sulfide) (PPS), Poly(butyl vinyl ether), Poly(ethyl vinyl ether), Poly(hexyl vinyl ether), Poly(isobutyl vinyl ether), Poly(isopropyl vinyl ether), Poly(methyl vinyl ether), Poly(octyl vinyl ether), Poly(propyl vinyl ether), Poly(trifluoromethoxy 1,1-difluoroethylene), Polymethylphenylsiloxane, Polydimethylsiloxane, Poly(2,2,2-trifluoroethyl acrylate), Styrene-butadienne rubber (SBR), Nitrile-butadiene rubber (NBR) and Ethylene propylene diene monomer rubber (EPDM). In some embodiments the polymer (P2) may be a functionalized perfluoropolyether (PFPE).

Polymer (P2) is a polymer functionalized with at least two isocyanuric or barbituric acid moieties corresponding to formula (D): 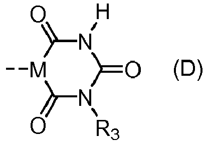 wherein 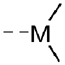 is 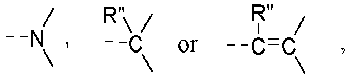
wherein R" is H or a C₁-C₈ alkyl group and,
wherein R₃ is H or a C₁-C₂₀ hydrocarbyl group or a -(C=O)-R"' moiety with R'" being a C₁-C₂₀ hydrocarbyl group.

R₃ is generally H or a C₁-C₂₀ hydrocarbyl group or a -(C=O)-R'" moiety with R'" being a C₁-C₂₀ hydrocarbyl group. R₃ is preferably H or a C₁-C₂₀ hydrocarbyl group. In some embodiments, R₂ is a -(C=O)-R"' moiety with R'" being a C₁-C₂₀ hydrocarbyl group. When R₃ is a -(C=O)-R'" moiety, it is preferably an acetyl moiety -CO-CH₃. R₃ is advantageously an alkyl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl. Good results were obtained with R₃ equals to H.

In some preferred embodiments, the polymer (P2) is chosen from polysiloxanes corresponding to formula (E) and polysiloxanes corresponding to formula (F), with formulae (E) and (F) as represented hereinafter : 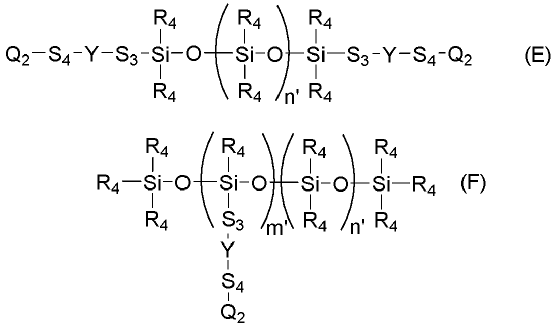
wherein each R₄ is independently selected from C₁-C₂₀ hydrocarbyl groups optionally substituted by a perfluoroalkyl group, and
wherein S₃ and S₄ which may be the same or different are nil or a C₁-C₄₀ hydrocarbylene groups optionally interrupted by one or more heteroatoms or heteroatom-containing groups chosen from the list consisting of -O-, -S-,-(C=O)-, -(C=S)-,-CO-NH-, -NH-CO-O- and -NH-CO-NH-, and
wherein Y is a divalent group selected from the list consisting of -CH₂-CH₂-,-*S-CH₂-CH₂-, -*CH₂-CH₂-S-, -*NH(C=O)-, -(*C=O)NH-, -*NR(C=O)-,-(*C=O)NR-, -(*C=O)O-, *O(C=O)-, -*NH-CO-O-, -NH-CO-O*- and -NH-CO-NH- wherein the atom designed with * is linked to S₃ and wherein R is a C₁-C₈ alkyl group and,
wherein n' is an integer ranging from 5 to 4000, and
wherein m' is an integer such as the ratio n'/m' is ranging from 500 to 2, and wherein Q₂ is an isocyanuric or a barbituric acid moiety corresponding to formula (D): 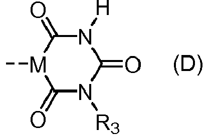 wherein 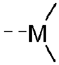 is 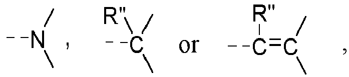
wherein R" is H or a C₁-C₈ alkyl group and,
wherein R₃ is H or a C₁-C₂₀ hydrocarbyl group or a -(C=O)-R"' moiety with R'" being a C₁-C₂₀ hydrocarbyl group.

Each R₄ is independently selected from C₁-C₂₀ hydrocarbyl groups. In some embodiments, each R₄ is independently selected from C₁-C₂₀ hydrocarbyl groups optionally substituted by a perfluoroalkyl group. By hydrocarbyl group is meant univalent group comprising only carbon and hydrogen atoms formed by removing a hydrogen atom from a hydrocarbon. The hydrocarbyl group can be saturated or unsaturated, linear, branched or cyclic. When the hydrocarbyl group is cyclic it may be an aryl group formed by removing a hydrogen atom from an aromatic hydrocarbon i.e. from a cyclic conjugated unsaturated hydrocarbon ring having a number of delocalized π electrons following the Huckel rule. By perfluoroalkyl group is meant any alkyl group in which each H atom is replaced by F atom. Hydrocarbyl group R₄ is advantageously an alkyl or an aryl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl, dodecyl, tetradecyl, hexadecyl and octadecyl groups. Suitable aryl groups may be optionally substituted phenyl group. Good results were obtained with R₄ being phenyl group. In a preferred embodiment R₄ is an alkyl group and more preferably a methyl group.

Just as matter of example the polysiloxanes represented in figures **(XIX)** to **(XXXVI)** below are possible polymers (P2) according to the present invention : 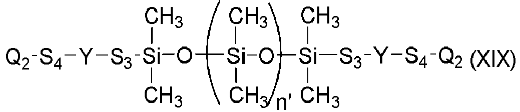 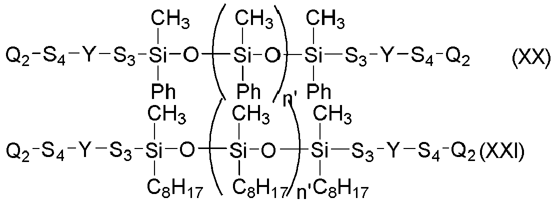 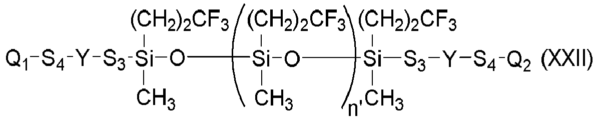 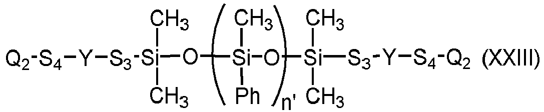 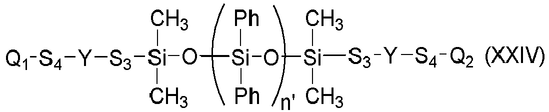 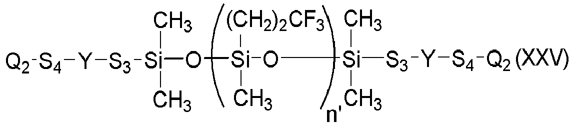 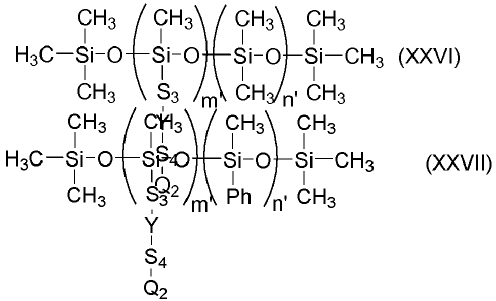 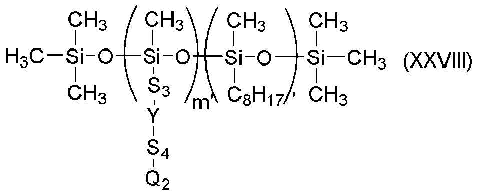 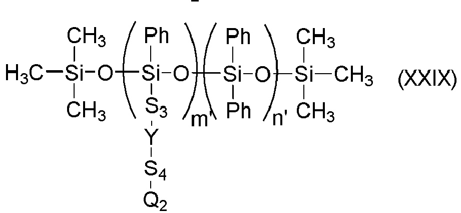 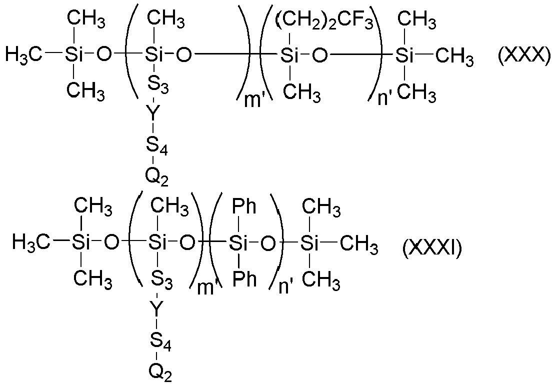 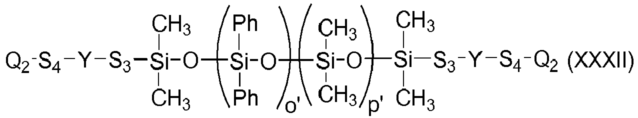 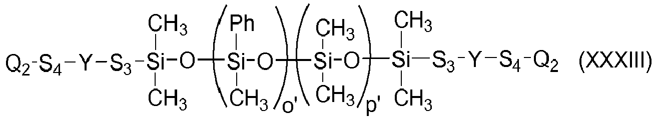 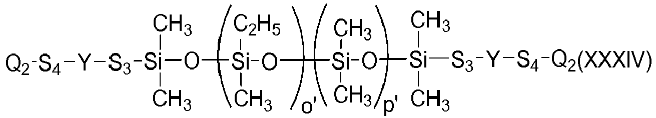 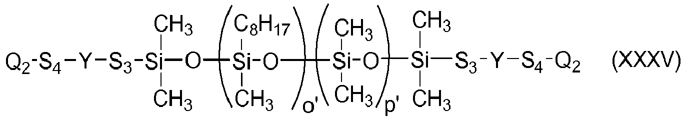 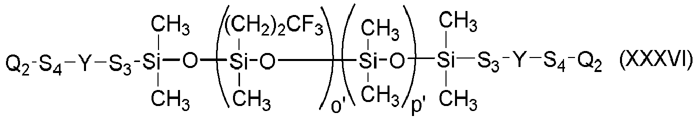 wherein for polysiloxanes according to figures (XXXII) to (XXXVI) o' and p' are integers such that o' + p' = n', with n' as defined above.

R₃ is generally H or a C₁-C₂₀ hydrocarbyl group or a -(C=O)-R'" moiety with R'" being a C₁-C₂₀ hydrocarbyl group. R₃ is preferably H or a C₁-C₂₀ hydrocarbyl group. In some embodiments, R₃ is a -(C=O)-R'" moiety with R'" being a C₁-C₂₀ hydrocarbyl group. When R₃ is a -(C=O)-R"' moiety, it is preferably an acetyl moiety -CO-CH₃. R₃ is advantageously an alkyl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl. Good results were obtained with R₃ equals to H.

Y is generally selected from the list consisting of -CH₂-CH₂-, -*S-CH₂-CH₂-,-*CH₂-CH₂-S-, -*NH(C=O)-, -(*C=O)NH-, -*NR(C=O)-, -(*C=O)NR-, -(*C=O)O-, -*O(C=O)-, -*NH-CO-O-, -NH-CO-O*- and -NH-CO-NH- wherein the atom designed with * is linked to S₃ and wherein R is a C₁-C₈ alkyl group. Preferably Y is selected from the list consisting of -CH₂-CH₂-, -*S-CH₂-CH₂-, -*CH₂-CH₂-S-, -*NH(C=O)-, -(*C=O)NH-, more preferably from the list consisting of -CH₂-CH₂-, -*S-CH₂-CH₂- and -*NH(C=O)-. Good results were obtained with Y being - *NH(C=O)-.

S₃ is generally nil or a C₁-C₄₀ hydrocarbylene group optionally interrupted by one or more heteroatoms or heteroatom-containing groups chosen from the list consisting of -O-, -S-, -(C=O)-, -(C=S)-, -CO-NH-, -NH-CO-O- and -NH-CO-NH-.

S₃ is preferably a C₁-C₄₀ hydrocarbylene group, more preferably S₃ is -(CH₂)_{q}- with q ranging from 1 to 12 and even more preferably S₃ is -(CH₂)₃-. In some other preferred embodiments S₃ is nil.

S₄ is generally nil or a C₁-C₄₀ hydrocarbylene group optionally interrupted by one or more heteroatoms or heteroatom-containing groups chosen from the list consisting of -O-, -S-, -(C=O)-, -(C=S)-, -CO-NH-, -NH-CO-O- and -NH-CO-NH-.

S₄ is preferably a C₁-C₄₀ hydrocarbylene group, more preferably S₄ is -(CH₂)q-with q ranging from 1 to 12 and even more preferably S₄ is -(CH₂)-.

In some preferred embodiments, S₃ is nil and S₄ is -CH₂-.

In some other preferred embodiments, S₃ is -(CH₂)₃- and S₄ is -CH₂-.

In some still preferred embodiments, R₃ is H, Y is -CH₂-CH₂-, S₃ is nil and S₄ is -CH₂- while R₄ is as previously defined.

In some more preferred embodiments, R₃ is H, Y is -CH₂-CH₂-, S₃ is nil and S₄ is -CH₂- while R₄ is -CH₃. Thus, examples of polysiloxane (P2) according to the invention are represented by formulae (E₁), (E'₁) (with R"=H), (F₁) and (F'₁) (with R"=H) below:

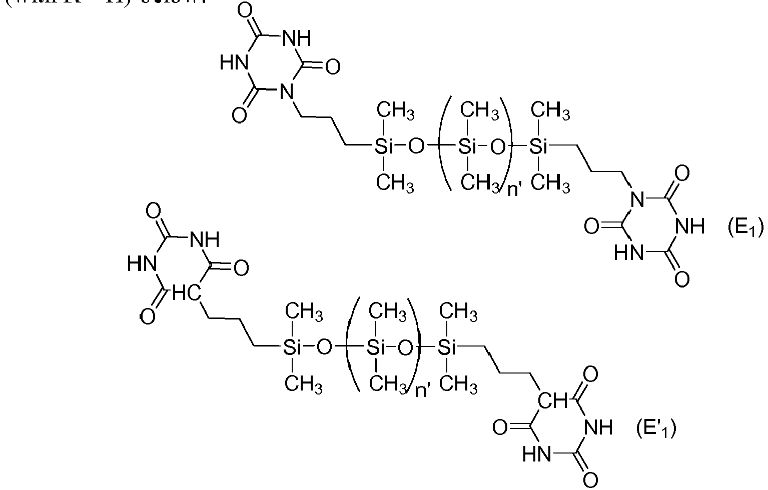

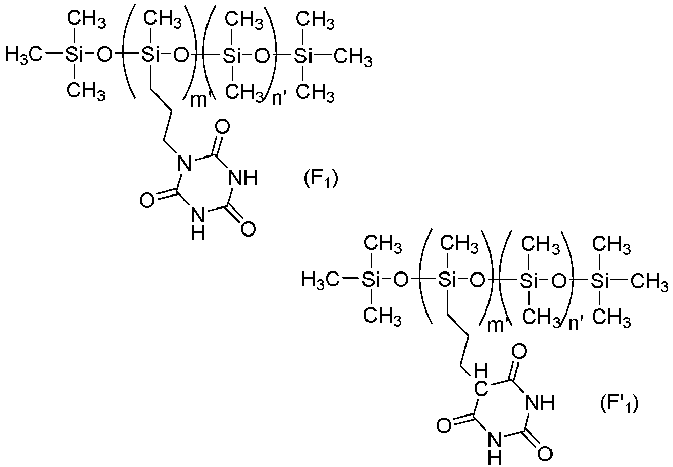

In some other preferred embodiments, R₃ is H, Y is -*S-CH₂-CH₂-, S₃ is -(CH₂)₃- and S₄ is -CH₂- while R₄ is as previously defined.

In some more preferred embodiments, R₃ is H, Y is -*S-CH₂-CH₂-, S₃ is -(CH₂)₃- and S₄ is -CH₂- while R₄ is -CH₃. Thus, examples of polysiloxanes (P2) according to the invention are represented by formulae (E₂), (E'₂) (with R"=H), (F₂) and (F'₂) (with R"=H) below :

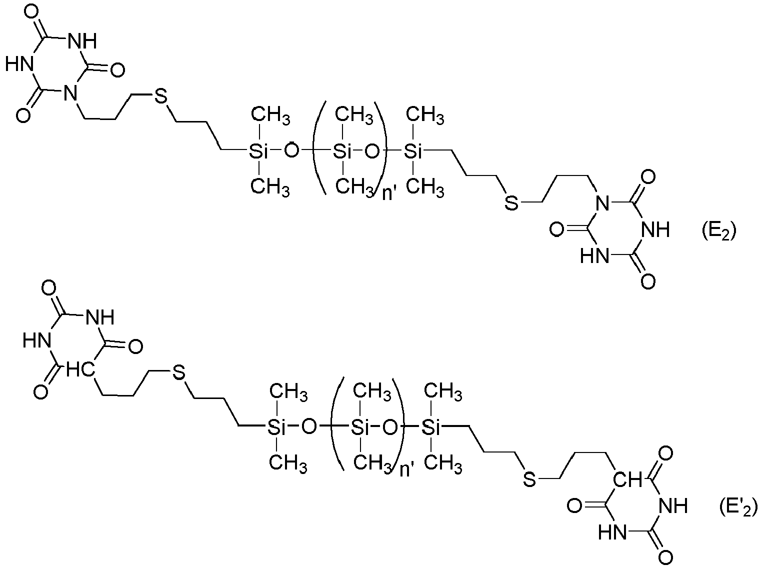

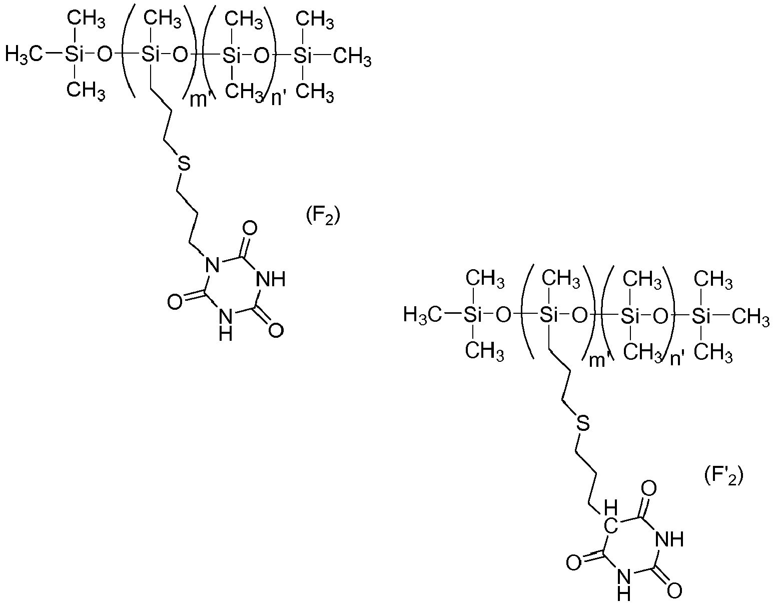

In some still preferred embodiments, R₃ is H, Y is - *NH(C=O)-, S₃ is -(CH₂)₃- and S₄ is -CH₂- while R₄ is as previously defined.

In some more preferred embodiments, R₃ is H, Y is -*NH(C=O)-, S₃ is -(CH₂)₃- and S₄ is -CH₂- while R₄ is -CH₃. Thus, examples of polysiloxanes (P2) according to the invention are represented by formulae (E₃), (E'₃) (with R" =-CH₂-CH₃), (F₃) and (F'₃) (with R" = -CH₂-CH₃) below :

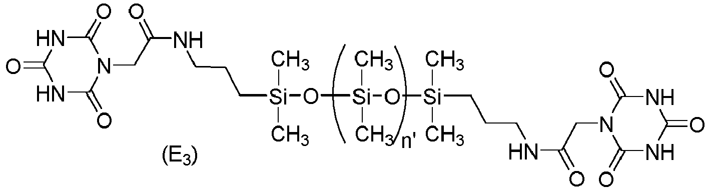

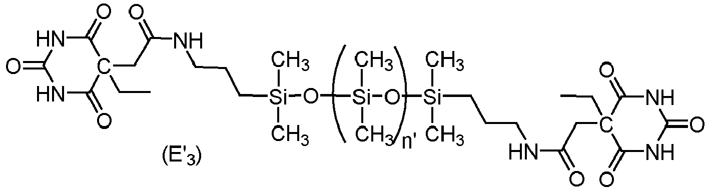

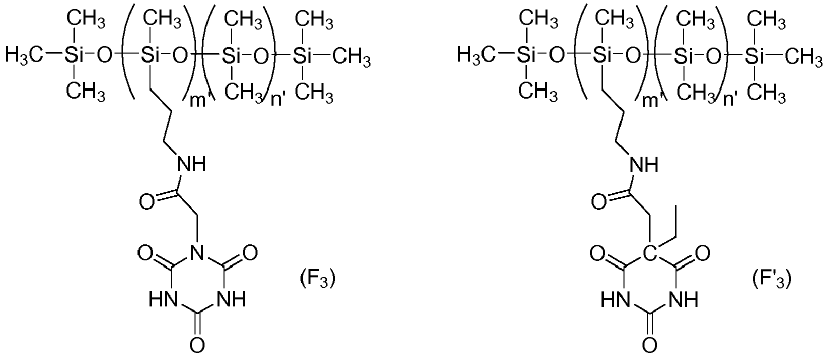

In some preferred embodiments R₃ is H, Y is -CH₂-CH₂-, S₃ is nil and S₄ is-C₆H₄- while R₄ is -CH₃. Example of polysiloxanes (P2) according to the invention is represented by formula (E"₁) (with R"=H) :

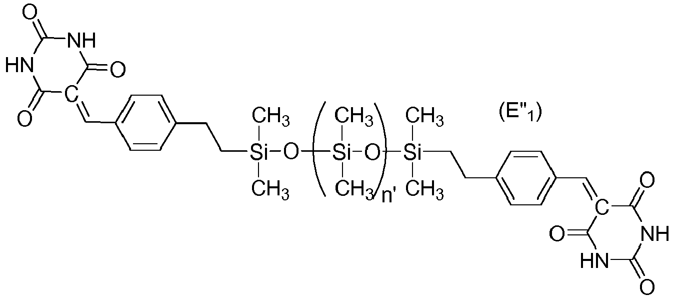

In some other preferred embodiments R₃ is H, Y is -*S-CH₂-CH₂-, S₃ is -(CH₂)₃- and S₄ is -C₆H₄- while R₄ is -CH₃. Example of polysiloxanes (P1) according to the invention is represented by formula (E"₂) (with R"=H) :

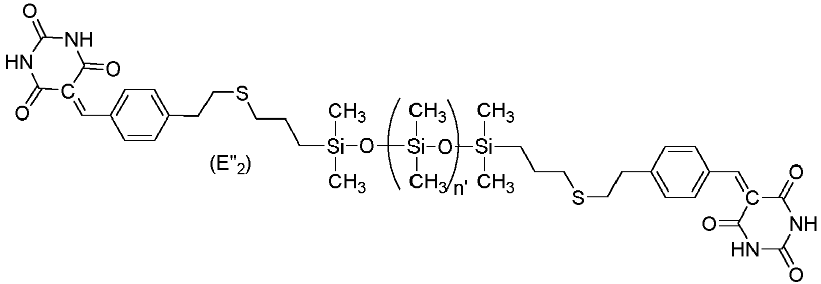

In some still preferred embodiments R₃ is H, Y is -*NH(C=O)-, S₃ is -(CH₂)₃- and S₄ is -C₆H₄- while R₄ is -CH₃. Example of polysiloxanes (P2) according to the invention is represented by formula (E"₃) (with R"=H) :

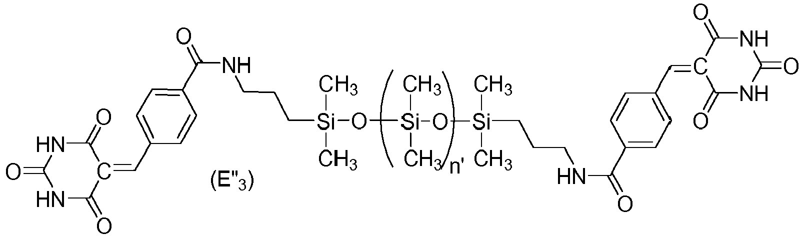

Preferably, the polysiloxane (P2) suitable for the composition according to the invention is a telechelic PDMS corresponding to formula (E₁), (E'₁), (E"₁), (E₂), (E'₂), (E"₂), (E₃), (E'₃) or (E"₃). More preferably, the polysiloxane (P2) suitable for the composition according to the invention is a telechelic PDMS corresponding to formula (E₁), (E₂) or (E₃) and even more preferably the polysiloxane (P2) suitable for the composition according to the invention is a telechelic PDMS corresponding to formula (E₃).

For the polysiloxane (P2), n' represents an average number of repeating units that can be determined by NMR spectroscopy by a method well known by the skilled person and that will be described in the experimental part.

Generally, n' is an integer at least equal to 5, preferably at least equal to 7, more preferably at least equal to 10 and even more preferably at least equal to 12. Besides, n' is an integer at most equal to 4000, preferably at most equal to 2000, more preferably at most equal to 1000 and even more preferably at most equal to 200.

Generally, n' is ranging from 5 to 4000. Preferably n is ranging from 7 to 2000, more preferably from 10 to 1000 and even more preferably from 12 to 200.

The polysiloxanes (E₁), (E'₁), (E"₁), (F₁) and (F'₁) can be obtained by hydrosilylation reaction involving Si-H groups, carbon-carbon double bond and for example platinum based catalyst as represented below for the synthesis of (E₁):

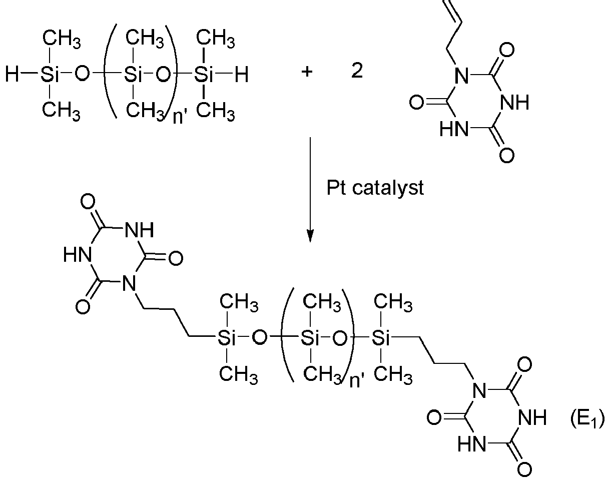

The polysiloxanes (E₂), (E'₂), (E"₂), (F₂) and (F'₂) can be obtained by thiol-ene addition involving a free radical initiator as represented below for the synthesis of (E₂):

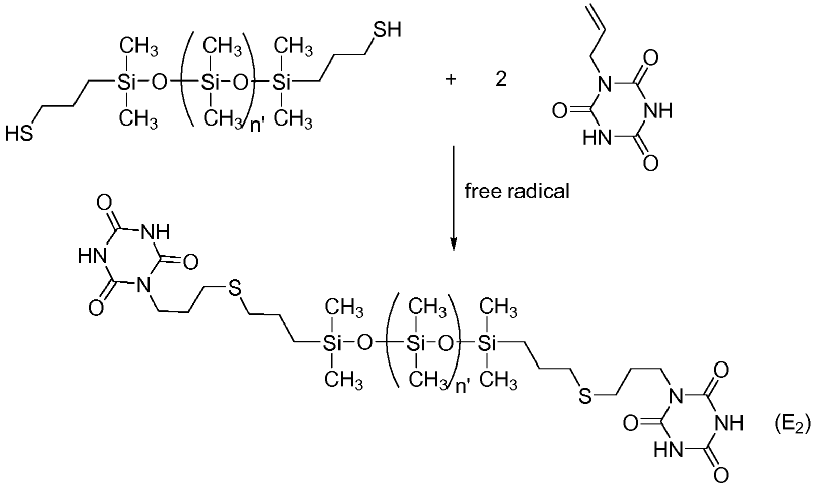

The polysiloxanes (E₃), (E'₃), (E"₃), (F₃) and (F'₃) can be obtained by condensation reaction of amine with carboxylic acid involving for example carbonyldiimidazole (CDI) as activating agent as represented below for the synthesis of (E₃):

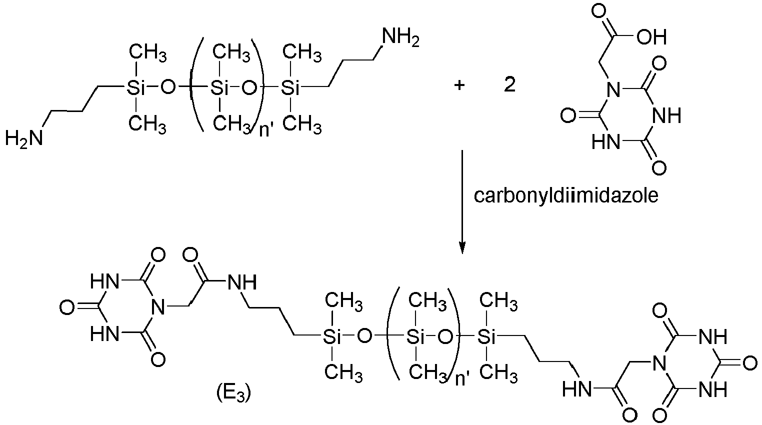

In some other preferred embodiments, the polymer (P2) is chosen from polyalkylene oxide-based polymers functionalized at both ends with an isocyanuric acid moiety and/or a barbituric acid moiety.

The functionalized polyalkylene oxide-based polymers have generally a number-average molecular weight (Mn) from 100 to 35000 g/mol, more preferably from 300 to 25000 g/mol.

Suitable functionalized at both ends polyalkylene oxide-based polymer for the composition according to the invention, may, for instance, include a polymer having a main chain including a repeating unit represented by a general formula : -(M'-O)_{n'}- wherein M' represents an alkylene group having 1 to 14 carbon atoms, and n' is the number of repeating units and is a positive integer. n' may be comprised for instance between 2 and 800, preferably from 4 to 600, more preferably from 6 to 400.

The main chain backbone of the polyalkylene oxide-based polymer may be composed of only one type of repeating unit or two or more types of repeating units.

In the following, the terms "polyethylene oxide", "PEO", "EO", "polyethylene glycol" and "PEG" are used interchangeably and refer to synthetic polymers of ethylene oxide, and the terms "polypropylene oxide", "PPO", "PO", "polypropylene glycol" and "PPG" are used interchangeably and refer to synthetic polymers of propylene oxide.

Examples of the main chain backbone of the polyalkylene oxide-basded polymer include polyethylene oxides, polypropylene oxides, polytetramethylene oxides (i.e polybutylene oxides), polyethylene oxide-polypropylene oxide copolymers, and polypropylene oxide-polybutylene oxide copolymers, or block copolymers of such units. Of these, polypropylene oxides are preferred.

The polyalkylene oxide polymer, preferably a polymer of polyethylene oxide and/or polypropylene oxide, may refer to a polymer of varying molecular weights, and of various types, ranging from linear multi-block copolymers, side-chain grafted block copolymers, and hyper-branched block copolymers to star-shaped block copolymers. Said polymers may also comprise end-modified and chain-extended polymers of various types.

Polyalkylene oxide-based polymers suitable for the invention may represent a homopolymer or a copolymer which can be obtained by polymerization of one or more linear, cyclic and/or branched, monounsaturated or polyunsaturated monomers. Polymer may represent a homopolymer or a copolymer which can be obtained by ring-opening polymerization of epoxides, lactones or lactams. Preferably, the polyalkylene oxide-based polymer, capable of forming all or part of the polymer backbone suitable for the composition according to the invention, is of formula PO, in which PO represents a homopolymer or a copolymer which can be obtained by polymerization of one or more linear, cyclic and/or branched, polyunsaturated (preferably diunsaturated), C₂-C₁₀, preferably C₂-C₄ alkylene oxides. PO preferably represents a homopolymer or a copolymer which can be obtained by polymerization of one or more diunsaturated, linear or branched C₂-C₄ alkylene oxides. More preferably, PO represents a polymer chosen from a polyethylene oxides, a polypropylene oxides, polytetramethylene oxides (polybutylene oxides), polyethylene oxide-polypropylene oxide copolymers, and polypropylene oxide-polybutylene oxide copolymers. Of these, polypropylene oxides are preferred.

Polyalkylene oxide-based polymers suitable for the invention may comprise for instance the units as follows:
- -EOₓPO_{y}EO_{z}-, wherein x is from 1 to 500, y is from 0 to 800, z is from 1 to 500;
- -POₓEO_{y}PO_{z}-, wherein x is from 1 to 500, y is from 0 to 800, z is from 1 to 500; or
- -EOₓPO_{y}-, wherein x is from 1 to 1000, y is from 1 to 1000.

The x, y and z values represent the average value of each respective repeat unit. The values of x, y, and z are typically determined based on molecular weight. Examples of such polymers are for instance copolymers supplied by Solvay under trade name Antarox® (such as Antarox® L61, Antarox® 17R2, etc.), by BASF under trade name Pluronic® (such as Pluronic® 25R4), by DOW under trade name Tergitol® (such Tergitol® L81), etc.

The polyalkylene oxide-based polymer suitable for the composition according to the invention may have an average molecular weight (Mₙ) from 100 to 35000 g/mol, more preferably from 300 to 25000 g/mol; measured by NMR spectroscopy or by gel permeation chromatography.

The isocyanuric acid moiety and/or a barbituric acid moiety may be attached to the polyalkylene oxide-based polymer directly with a single bond or via a linker, such as for instance a linear or branched C₁-C₆ alkylene group, C₆-C₁₂ aryl, C₇-C₁₂ alkaryl and C₇-C₁₂ alkylaryl groups, ether function, carbonyl function, ester function, carboxyl function, amine function, amide function, an urea or carbamate functional group, and/or a combination thereof.

The isocyanuric acid moiety may be preferably chosen in the group consisting of (it being understood that all the tautomeric forms are included) a substituted or unsubstituted trioxotriazine-based group, such as isocyanuric acid; notably the isocyanuric acid moiety as follows:

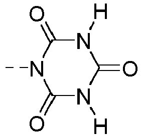

The barbituric acid moiety may be preferably chosen in the group consisting of (it being understood that all the tautomeric forms are included) a substituted or unsubstituted trioxypyrimidine group, such as barbituric acid (or malonylurea or 6-hydroxyuracil), notably the barbituric acid moiety as follows:

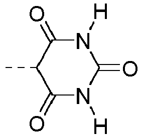

Preferably, polyalkylene oxide polymer (P2) suitable for the composition according to the invention is a polypropylene oxide polymer functionalized at both ends with isocyanuric acid (ICA), such as ICA-PPO-ICA. Polyalkylene oxide polymer (P2) suitable for the composition according to the invention may also be a polypropylene oxide-based polymer functionalized at both ends with barbituric acid (BA), such as BA-PPO-BA.

Preferably, the rate of chain-end functionalization of the functionalized polyalkylene oxide-based polymer (P2) of the invention ranges from 70 to 100%, more preferably from 85 to 100% and even more preferably from 95 to 100%; as calculated by 1H NMR comparison of signal corresponding to functionalized end-groups with the isocyanuric acid moiety and/or the barbituric acid moiety, and signal corresponding to non-functionnalized end-groups.

The functionalized polyalkylene oxide-based polymer (P2) suitable for the composition according to the invention may correspond to formula (G) as represented hereinafter: 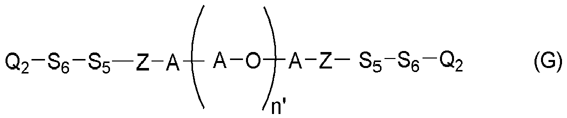 wherein
- A is an alkanediyl group, O is oxygen;
- S₅ and S₆ which may be the same or different are nil or a C₁-C₂₀ hydrocarbylene groups optionally interrupted by one or more heteroatoms or heteroatom-containing groups chosen from the list consisting of -O-, -S-,-(C=O)-, -(C=S)-, -CO-NH-,-COO-, -NH-CO-NH-, -NH-COO-;
- Z is a divalent group selected from the list consisting of - *CH₂-NH-, -*NH-CH₂-, -*CH₂-NR-, -*NR-CH₂-, -*CH₂-O-, -*O-CH₂-, -*CH₂-S-, -*S-CH₂-, -*S-CH₂-CH₂-, -*CH₂-CH₂-S-, -*NH(C=O)-, -(*C=O)NH-, -*NR(C=O)-,-(*C=O)NR-, -(*C=O)O-, -*O(C=O)-, -NH-CO-NH- and -NH-COO- wherein the atom designed with * is linked to S₁, and R is independently H or a C₁-C₂₀ hydrocarbyl group, such as notably a methyl, ethyl, propyl, benzyl, triphenylmethyl, or a benzylidene group;
- Q₂ is an isocyanuric acid moiety or a barbituric acid moiety; and
- n' is an integer ranging from 2 and 800, preferably from 4 to 600, more preferably from 6 to 400.

By alkanediyl is meant divalent group obtained by removal of 2 hydrogen atoms to aliphatic hydrocarbon.

In a preferred embodiment A is -CH₂-CH₂- group.

In another preferred embodiment A is -CH₂-CH(CH₃)- group.

Preferably the functionalized polyalkylene oxide-based polymer (P2) suitable for the composition according to the invention is a polymer of formula (H) as follows: 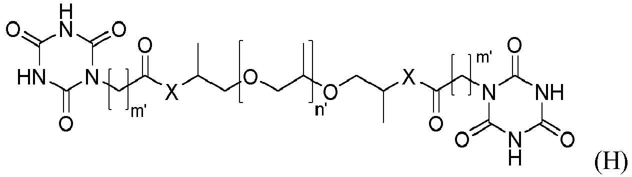 wherein n' is comprised between 2 and 800, preferably from 4 to 600, more preferably from 6 to 400, m' is comprised between 0 and 20, preferably from 1 to 12, X is an oxygen or a nitrogen atom.

The functionalized polyalkylene oxide-based polymer (P2) suitable for the composition according to the invention mays also be a polymer of formula (I) as follows: 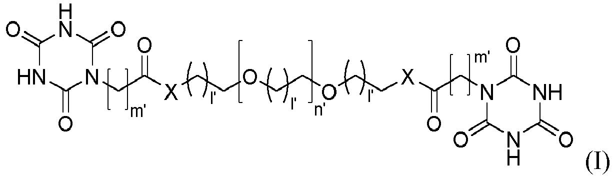 wherein n' is comprised between 2 and 800, preferably from 4 to 600, more preferably from 6 to 400, m' is comprised between 0 and 20, preferably from 1 to 12, 1' is comprised between 1 and 5, X is an oxygen or a nitrogen atom.

The functionalized polyalkylene oxide-based polymer (P2) suitable for the composition according to the invention mays also be a polymer of formula (J) as follows: 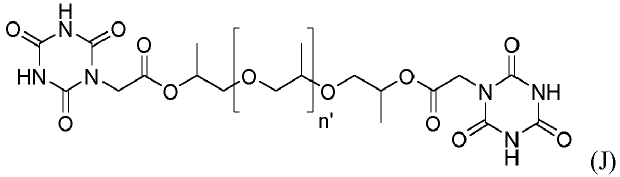 wherein n' is comprised between 2 and 800, preferably from 4 to 600, more preferably from 6 to 400.

The polyalkylene oxide-based polymer suitable for the composition according to the invention may be prepared by any process normally employed by a person skilled in the art, such as for instance by polymerization or reaction between a polyalkylene oxide-based polymer intermediate and a compound comprising an isocyanuric acid moiety and/or a barbituric acid moiety.

The polymer suitable for the composition according to the invention can be polymerized in a one-step process in the presence of a suitable catalyst in order to achieve the desired product. Alternatively, the polyalkylene oxide-based polymer may be first polymerized or prepolymerized and subsequently co-reacted with a compound comprising an isocyanuric acid moiety and/or a barbituric acid moiety, to obtain such product. Such a polymer can be synthesized by either a solution or a bulk reaction process.

It is perfectly possible to use as raw material a polyalkylene oxide-based polymer comprising at one or both ends a hydroxyl function, or a polyalkylene oxide-based polymer comprising at one or both ends a primary amine function.

The compound comprising an isocyanuric acid moiety and/or a barbituric acid moiety may comprise a suitable leaving group such as for example halogen or a reactive functionality like ester function, amide function, acyl chloride function or isocyanate function.

Compounds comprising an isocyanuric acid moiety and/or a barbituric acid moiety is preferably chosen in the group consisting of: benzyl 2-(2,4,6-trioxo-1,3,5-triazinan-1-yl)acetate, benzyl 2-(2,4,6-trioxohexahydropyrimidin-5-yl)acetate, methyl 2-(2,4,6-trioxo-1,3,5-triazinan-1-yl)acetate, methyl 2-(2,4,6-trioxohexahydropyrimidin-5-yl)acetate, 1-(2-chloroethyl)-1,3,5-triazinane-2,4,6-trione, 5-(2-chloroethyl)pyrimidine-2,4,6(1H,3H,5H)-trione.

The molar ratio between the polyalkylene oxide-based polymer and the compound comprising an isocyanuric acid moiety and/or a barbituric acid moiety may be comprised between 1:1 and 1:4, preferably between 1:1.5 and 1:2.5. Reaction between the polyalkylene oxide-based polymer and the compound comprising an isocyanuric acid moiety and/or a barbituric acid moiety may occur at a temperature from 20°C to 300°C, preferably from a temperature from 50°C to 230°C. Said reaction may be made in bulk conditions or also in presence of solvents, such as polar solvents, for instance tetrahydrofuran, dimethylformamide or dimethylsulfoxide. Said reaction may be carried out with or without catalyst for instance. The catalyst for the said reaction can be an acid catalyst, a base catalyst, a Lewis Acid catalyst, a titanium-based catalyst, an organotin catalyst or a catalyst commonly used for ester or amide synthesis. Notably the functionalized polymer (P2) of formula (G) as represented hereinafter: 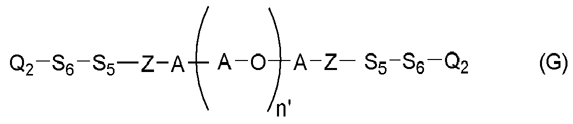 may be produced by a process comprising at least the steps of:
- preparing a mixture comprising at least

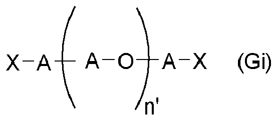

   Q₂-S₆-S₅-Y (Gii)

   wherein
   - A is an alkanediyl group, O is oxygen,
   - S₅ and S₆ which may be the same or different are nil or a C₁-C₂₀ hydrocarbylene groups optionally interrupted by one or more heteroatoms or heteroatom-containing groups chosen from the list consisting of -O-, -S-,-(C=O)-, -(C=S)-, -CO-NH-,-COO-, -NH-CO-NH-, -NH-COO-;
   - Z is a divalent group selected from the list consisting of - *CH₂-NH-, -*NH-CH₂-, -*CH₂-NR-, -*NR-CH₂-, -*CH₂-O-, -*O-CH₂-, -*CH₂-S-, -*S-CH₂-, -*S-CH₂-CH₂-, -*CH₂-CH₂-S-, -*NH(C=O)-, -(*C=O)NH-, -*NR(C=O)-,-(*C=O)NR-, -(*C=O)O-, -*O(C=O)-, -NH-CO-NH- and -NH-COO- wherein the atom designed with * is linked to S₅, and R is independently H or a C₁-C₂₀ hydrocarbyl group such as notably a methyl, ethyl, propyl, benzyl, triphenylmethyl, or a benzylidene group;
   - X is preferably selected from the list consisting of -H, -OH, -NH₂, -NHR,-(C=O)-L -COOH, -COOR, -NCO, -CH=CH₂, -CH₂L more preferably from the list consisting of OH, NH₂, and NHR wherein R is a C₁-C₂₀ hydrocarbylene group such as notably a methyl, ethyl, propyl, benzyl, triphenylmethyl, or a benzylidene group, L is a leaving group, such as for example halogen;
   - Y is a reactive group and capable of reacting with X so as to obtain a bridge Z between S₅ and A; Y can be selected from the list consisting of H, -OH, -NH₂,-NHR, -(C=O)-L -COOH, -COOR, -NCO, -CH=CH₂, -CH₂L, more preferably from the list consisting of -(C=O)-L, -COOH, -COOR, wherein R is a C₁-C₂₀ hydrocarbylene group such as notably a methyl, ethyl, propyl, benzyl, triphenylmethyl, or a benzylidene group, L is a leaving group, such as for example halogen;
   - Q₂ is an isocyanuric acid moiety or a barbituric acid moiety;
   - n' is an integer ranging from 2 and 800, preferably from 4 to 600, more preferably from 6 to 400; and
- reacting group X with group Y so as to obtain the polymer of formula (G).

Functionalized polyalkylene oxide-based polymers (P2) suitable for the composition according to the invention also have the faculty of forming three-dimensional networks with other functionalized polymer, notably with polysiloxanes (P1) functionalized with diaminotriazine moieties. Those three-dimensional networks may have anchoring points that are free to aggregate in the form of clusters, thus reinforcing the molecular cohesion of the constituted associations. The organization persists well beyond ambient temperature. Functionalized polyalkylene oxide-based polymers (P2) also exhibit a high thermal stability and do not degrade up to 220°C.

In the composition according to the invention the molar ratio between the at least one polysiloxane (P1) and the at least one polymer (P2) is generally adjusted in such a way that the molar ratio between the diaminotriazine moieties and the cyanuric or barbituric acid moieties ranges from 0.25 to 4.0. The molar ratio preferably ranges from 0.5 to 2.0, more preferably from 0.75 to 1.5, even more preferably from 0.9 to 1.1. In some preferred embodiments the molar ratio between the diaminotriazine moieties and the cyanuric or barbituric acid moieties is substantially equal to 1.

In some embodiments the composition according to the invention comprises, as sole polymers, at least one polymer (P1) and at least one polymer (P2).

In some other embodiments the composition according to the invention consists of at least one polymer (P1) and at least one polymer (P2).

In some preferred embodiments the composition according to the invention consists of at least one polysiloxane (P1) corresponding to formula (A) and of at least one polymer (P2) corresponding to formula (E).

In some more preferred embodiments the composition consists of telechelic polysiloxane (P1) corresponding to formula (A₁) and of telechelic polysiloxane (P2) corresponding to formula (E₁) as represented hereinafter :

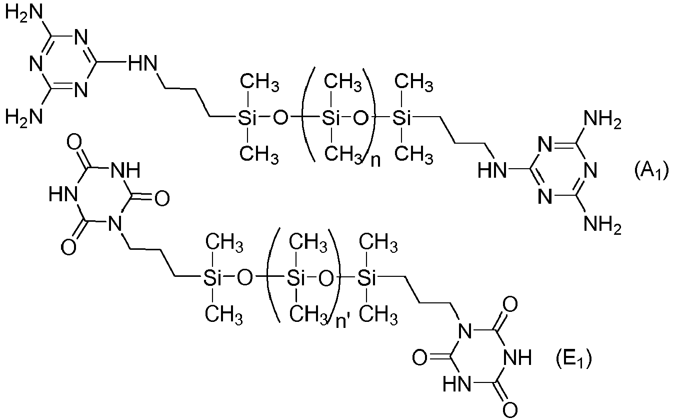

In some preferred embodiments the composition according to the invention consists of at least one polysiloxane (P1) corresponding to formula (A) and of at least one polyalkylene oxide polymer (P2) corresponding to formulae (H), (I) or (J).

In some more preferred embodiments the composition consists of telechelic polysiloxane (P1) corresponding to formula (A₁) and of telechelic polyalkylene oxide (P2) corresponding to formula (J) as represented hereinafter :

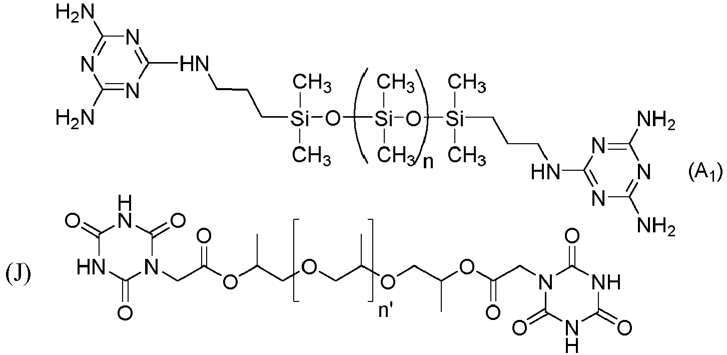

The thermoplastic composition according to the invention is generally substantially free of any liquid i.e. generally comprises an amount of liquid not exceeding 0.5 wt. % based on the total weight of the composition, or is even totally free of any liquid.

The thermoplastic composition according to the invention may comprise at least one other ingredient; for example, it may comprise a stabilizer, a filler, a plasticizer or a processing aid. Good results can be obtained with a thermoplastic composition composed essentially of, i.e. comprising an amount of other ingredient not exceeding 0.5 wt. % based on the total weight of the composition , or even composed of the polysiloxane (P1) and of the polymer (P2).

The compositions according to the invention may be assessed with regard to their rheological properties as will be described in experimental part.

Without being bond by any theory, the polysiloxane (P1) bearing diaminotriazine moieties is capable of giving supramolecular association via H-bond interactions when mixed with polymer (P2) bearing complementary cyanuric or barbituric acid. The composition comprising such polymers generally results in a thermally reversible supramolecular network and in a material exhibiting thermoplastic behavior in a temperature range generally reaching temperature well above room temperature. Accordingly, the composition generally gives a solid material at room temperature that can be soften by heating and even liquefied when the temperature reached is enough to break all the intermolecular H-bonds responsible for supramolecular association. The different physical states of the compositions can be characterized by rheological measurements. More particularly, the dissociation temperature of the supramolecular network can generally be associated to the temperature of the cross-over point (T_{C-O}) between the curve representing the storage modulus G' vs temperature and the curve representing the loss modulus G" vs temperature.

The cross-over point may be determined by rheological measurement, using a RDA III instrument with TA orchestrator software, equipped with a parallel plates geometry (diameter 8 mm or 25 mm). The linear domain can be firstly determined, and a temperature sweep at 10 rad/s between Tmin and Tmax at 2°C/min can be acquired. Cross-Over point can be measured on the Tsweep curve at the temperature where moduli G' and G" cross.

In the composition according to the invention, the temperature of the cross-over point (T_{C-O}) can surprisingly be tuned by changing the nature of the polymer bearing the isocyanuric or barbituric acid moieties. This is advantageous when compared to a method which would consist in replacing isocyanuric or barbituric acid moieties (instead of replacing the polymer) by other H bond donor/acceptor moieties which are generally very expensive functional groups.

The crosslink density of the supramolecular network is generally related to the ratio of the number of diaminotriazine containing repetitive units with the number of siloxane repetitive units or to the ratio of diaminotriazine containing end groups with the number of siloxane repetitive units. Depending on the crosslink density of the supramolecular network, the material may have different mechanical and rheological properties. For example, the material may be a soft elastomeric network when crosslink density is low or a hard and brittle network when crosslink density is high.

Broadeness of rubbery plateau (°C) is measured on the temperature sweep curve and covers the range of temperatures comprised between the glass transition temperature (Tg) and the temperature of dissociation T_{C-O} (cross-over point).

In the composition according to the invention, the broadness of rubbery plateau is very large and can surprisingly be tuned by changing the nature of the polymer bearing the isocyanuric or barbituric acid moieties.

It is another object of the invention to disclose a process for preparing the thermoplastic composition according to the invention generally comprising the steps of:
- providing a mixture (M1) comprising the polysiloxane (P1) as previously defined and a liquid L₁,
- providing a mixture (M2) comprising the polymer (P2) as previously defined and a liquid L₂,
- mixing the mixture (M1) with the mixture (M2) under stirring so as to obtain a mixture (M3),
- removing the liquids L₁ and L₂ from the mixture (M3).

Generally, L₁ and L₂ which may be the same or different are liquids selected from the list consisting of water, methanol, ethanol, n-propanol, isopropanol, butanol, acetone, methylethylketone, carbon tetrachloride, chloroform, methylene chloride, ethylacetate, diethylether, tetrahydrofuran, benzene, toluene, xylene and of mixtures thereof.

In some preferred embodiments, L₁ and L₂ are mixtures of liquids consisting of at least one liquid, selected from the list consisting of acetone, methylethylketone, carbon tetrachloride, chloroform, methylene chloride, ethylacetate, diethylether, tetrahydrofuran, benzene, toluene and xylene and at least one liquid selected from the list consisting of water, methanol, ethanol, n-propanol, isopropanol and butanol.

In some still preferred embodiments, L₁ and L₂ are mixtures of liquids consisting of at least one liquid selected from the list consisting of methylethylketone, chloroform, methylene chloride, ethylacetate, diethylether, tetrahydrofuran and toluene and at least one liquid selected from the list consisting of water, methanol and ethanol.

In further preferred embodiments, L₁ and L₂ are mixtures of liquids consisting of at least one liquid selected from the list consisting of chloroform, methylene chloride and tetrahydrofuran and at least one liquid selected from the list consisting of water, methanol and ethanol.

Good results were obtained with L₁ and L₂ mixtures consisting of chloroform and methanol.

The mixtures of liquids L₁ and L₂ consisting of chloroform and methanol suitable for preparing the thermoplastic composition according to the invention generally comprise at least 1 wt.%, preferably at least 5 wt.% and more preferably at least 8 wt.% of methanol. Besides, the mixtures generally comprise at most 30 wt.%, preferably at most 20 wt.% and more preferably at most 15 wt.% of methanol.

The mixtures L₁ and L₂ suitable for preparing the thermoplastic composition according to the invention generally comprise at least 70 wt.%, preferably at least 80 wt.% and more preferably at least 85 wt.% of chloroform. Besides, the mixtures generally comprise at most 99 wt.%, preferably at most 95 wt.% and more preferably at most 90 wt.% of chloroform.

In some other preferred embodiments, L₁ and L₂ are liquids consisting of one liquid, selected from the list consisting of acetone, methylethylketone, carbon tetrachloride, chloroform, methylene chloride, ethylacetate, diethylether, tetrahydrofuran, benzene, toluene and xylene.

Good results were obtained with liquids L₁ and L₂ consisting of chloroform. The mixture (M1) generally comprises at least 5 g.l⁻¹ of polysiloxane (P1), preferably at least 10 g.l⁻¹ and more preferably at least 50 g.l⁻¹. Besides, the mixture (M1) generally comprises at most 600 g.l⁻¹ of polysiloxane (P1), preferably at most 400 g.l⁻¹, more preferably at most 300 g.l⁻¹ and even more preferably at most 260 g.l⁻¹.

In some embodiments the polysiloxane (P1) is partially soluble in the liquid L₁ of the mixture (M1).

In some preferred embodiments the polysiloxane (P1) is completely soluble in the liquid L₁.

The mixture (M1) according to the invention may comprise at least one other ingredient; for example, it may comprise a stabilizer, a filler, a plasticizer or a processing aid. Good results can be obtained with mixture (M1) composed essentially of (i.e. comprising an amount of other ingredient not exceeding 0.5 wt. % based on the total weight of the mixture), or even composed of the polysiloxane (P1) and of the liquid L₁.

The mixture (M2) generally comprises at least 5 g.l⁻¹ of polymer (P2), preferably at least 10 g.l⁻¹ and more preferably at least 50 g.l⁻¹. Besides, the mixture (M2) generally comprises at most 600 g.l⁻¹ of polymer (P2), preferably at most 400 g.l⁻¹ , more preferably at most 300 g.l⁻¹ and even more preferably at most 260 g.l⁻¹. In some embodiments the polymer (P2) is partially soluble in the liquid L₂ of the mixture (M2).

In some preferred embodiments the polymer (P2) is completely soluble in the liquid L₂.

The mixture (M2) according to the invention may comprise at least one other ingredient; for example, it may comprise a stabilizer, a filler, a plasticizer or a processing aid. Good results can be obtained with mixture (M2) composed essentially of (i.e. comprising an amount of other ingredient not exceeding 0.5 wt. % based on the total weight of the mixture), or even composed of the polymer (P2) and of the liquid L₂.

The mixture (M3) is obtained by stirring mixture (M1) with mixture (M2) at a temperature generally of at least 10 °C, preferably of at least 15 °C and more preferably of at least 20 °C. Besides, the mixture (M3) is obtained by stirring mixture (M1) with mixture (M2) at a temperature generally of at most 50 °C, preferably of at most 40 °C and more preferably of at most 30 °C.

Stirring of (M1) with (M2) is performed for a duration generally of at least 0.5 minute, preferably of at least 1 minutes, more preferably of at least 2 minutes and even more preferably of at least 5 minutes. Besides, stirring of (M1) with (M2) is performed for a duration generally of at most 120 minutes, preferably of at most 60 minutes, more preferably of at most 45 minutes and even more preferably of at most 30 minutes. Good results were obtained when stirring (M1) with (M2) during 30 minutes.

Just for sake of example, the mixture (M3) can be obtained by stirring of mixture (M1) with mixture (M2) in a vessel equipped with mechanical stirring equipment. In some embodiment this mechanical stirring is accompanied by further sonication.

In some embodiments the polysiloxane (P1) and the polymer (P2) are partially soluble in the liquid comprising L₁ and L₂ of the mixture (M3).

In some preferred embodiments the polysiloxane (P1) and the polymer (P2) are completely soluble in the liquid comprising L₁ and L₂ of the mixture (M3). Removing the liquids L₁ and L₂ from the mixture (M3) is generally obtained by distillation. Generally L₁ and L₂ are removed by heating the mixture (M3), preferably under reduced pressure.

It is also an object of the invention to disclose a process for preparing the thermoplastic composition according to the invention generally comprising the steps of:
- preparing under stirring and heating up to a temperature T a mixture (M) comprising a least one polysiloxane (P1) and at least one polymer (P2),
- cooling the mixture to a temperature ranging from Tg1 to 50 °C so as to obtain the desired thermoplastic composition as a solid,
wherein T is ranging from (T_{C-O} - 50°C) to (T_{C-O} + 50°C) with T_{C-O} the temperature of the cross-over point of the composition determined by rheological measurements and Tg1 is the glass transition temperature of the polysiloxane (P1) measured by differential scanning calorimetry (DSC).

The mixture (M) can be obtained in any vessel or apparatus equipped with mechanical stirring and heating functionalities. For example, the mixture (M) can be obtained in a twin screw extruder and the desired composition can be recovered in solid form after cooling and, optionally, after being granulated by a process well known by the skilled person.

Generally cooling is performed until reaching a temperature ranging from Tg1 to 50 °C, preferably ranging from 0 °C to 35 °C and more preferably from 10 °C to 30°C, wherein Tg1 is the glass transition temperature of the polysiloxane (P1) measured by differential scanning calorimetry (DSC) by a procedure well-known by the skilled person.

It is another object of the invention to disclose a coating comprising the thermoplastic composition as previously described and as previously prepared.

It is also another object of the invention to disclose the use of the thermoplastic composition as previously described and as previously prepared in sealing, in gaskets or in damping elements.

It is still another object of the invention to disclose the use of the thermoplastic composition as previously described for preventing or reducing ice formation on the coating according to the present invention.

It is still another object of the invention to disclose the use of the thermoplastic composition as previously described for causing self-healing of the coating according to the invention after the coating has been damaged.

### Examples

### Reagents and solvents

Telechelic amino-terminated polydimethylsiloxanes were supplied by Gelest (references DMS A-12 and DMS A-15). According to the provider, the molecular weight of DMS A-15 was 3000 g.mol⁻¹ and the molecular weight of DMS A-12 was 1000 g.mol⁻¹. The other reagents were purchased from Sigma-Aldrich, Acros or Alfa-Aesar. All chemicals were used as received without any further purification.

### ¹H and ¹³C Nuclear Magnetic Resonance (NMR)

The NMR spectra were recorded on a Brüker AV 400 MHz at 300 K. The solvents used were CDCl₃ or DMSO-d₆. The chemical shifts (δ) are expressed in ppm, using the signal of residual solvent as an intern reference. The signals multiplicity is indicated as follows: s (singulet), bs (broad singulet), d (doublet), m (multiplet).

### Thermal Gravimetric Analysis (TGA)

TGA experiments were performed under nitrogen on a Perkin Elmer TGA 4000 instrument to determine the thermal stability of the materials. 20-30 mg of product were analyzed in a ceramic crucible from 40°C to 800°C at 10°C/min. This first thermal analysis allows to determine the maximum temperature (Tₘₐₓ) for the rheological experiments (working temperature is selected 10 °C below the temperature at which the sample exhibits a weight loss of 1 wt. %).

### Differential Scanning Calorimetry (DSC)

DSC experiments were performed under nitrogen on a Perkin Elmer DSC 8000 instrument in order to determine the melting/crystallization temperatures (Tm, Tc) and the glass transition temperature (Tg) of the materials. 5-8 mg of product were analyzed in an aluminum crucible. Three heating/cooling cycles were performed between -60°C and Tmax (determined by TGA). The first cycle at 10°C/min allows erasing the thermal history of the sample. The second and third cycles were performed at 10°C/min and 40°C/min, respectively.

### Rheology characterization

The rheological properties were investigated on ARES G2 instrument, equipped with parallel plates geometry (diameter 25 mm or 50 mm). The linear domain was firstly determined, and a temperature sweep at 10 rad/s between 25 °C and Tₘₐₓ at 2°C/min was acquired.

### Synthesis of Thymine-1-Acetic acid

Thymine-1-acetic acid was prepared according to the reaction scheme below:

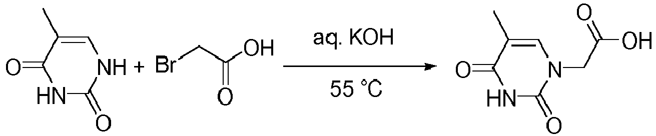

In a 500 ml round bottomed flask, 20.0 g (158.6 mmol) of thymine were dissolved in 100 ml of a 0.7 M KOH aqueous solution was heated at 50 °C for 10 minutes under stirring. 36 g (259.1 mmol) of bromoacetic acid dissolved in 50 ml of water were added dropwise to the thymine solution and the reaction mixture was stirred at 55 °C overnight. After cooling to room temperature, the reaction mixture was acidified to pH ∼2-3 by adding dilute HCl leading to the formation of a precipitate. The mixture was kept at 2-3 °C for 3 hours and the precipitate was filtered, and washed with water and methanol thoroughly, and dried under high vacuum to obtain thymine-1-acetic acid as white powder in 52% yield.

1H NMR (400 MHz, DMSO-d6): δ 13.21-13.01 (br s, 1H), 11.35 (s, 1H), 7.49 (s, 1H), 4.36 (s, 2H), 1.75 (s, 3H).

### Preparation of Thy-PDMS3000-Thy

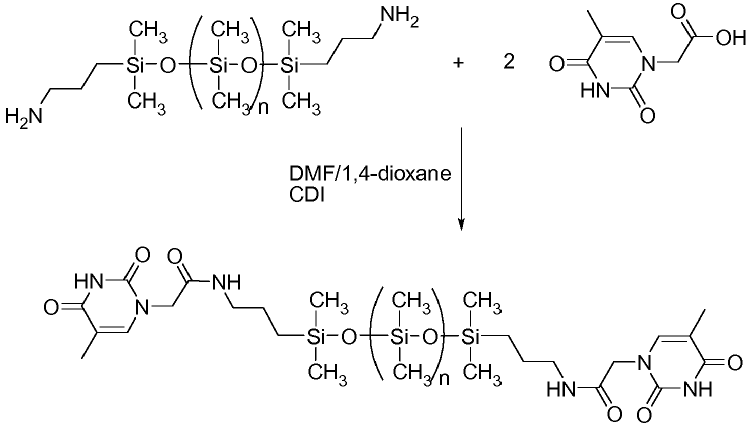

4.38 g (27 mmol) of carbonyldiimidazole (CDI) were added to a suspension of 4.97 g (27 mmol) of thymine-1-acetic acid in 40 ml of dry DMF and the mixture was stirred at room temperature for 1 hour. Then a solution of 30 g (10 mmol) of PDMS-diamine (DMS-A15) in 40ml of anhydrous dioxane was added and the reaction medium was stirred at room temperature overnight. The reaction medium was concentrated under vacuum and diluted with 150 ml of distilled water. The polymer was extracted with 3 x 150 ml of dichloromethane and the combined organic phase was washed with 5 % aqueous LiCl solution, and finally with water. The organic phase was dried over anhydrous sodium sulfate before being filtered and concentrated under vacuum. Finally, the resulting solid compound was dried under high vacuum to give the desired material in 85 % yield.

¹H NMR (400 MHz, CDCl₃): δ 9.70 (br s, 2H), 7.20 (s, 2H), 6.80 (br s, 2H), 4.29 (s, 4H), 3.21 (m, 4H), 1.91 (s, 6H), 1.51 (m, 4H), 0.51 (m, 4H), 0.06 (m, 240H). The ratio of the integration of the ¹H NMR signal assigned to protons of CH₃-Si groups at 0.06 ppm (240H) with the integration of the ¹H NMR singlet signal assigned to protons of -CH₃- group of Thy at 1.91 ppm (6H) allows to determine the value of n in the formula proposed on the reaction scheme above i.e. n = 38. This value is confirmed when considering the integration of the ¹H NMR multiplet signal assigned to protons of central -CH₂- group of -CH₂-**CH₂**-CH₂- at 1.51 ppm (4H) and the ¹H NMR signal assigned to protons of CH₃-Si groups.

### Preparation of DAT-PDMS3000-DAT

The telechelic end-grafting of PDMS chains by diaminopyrazine moiety (DAT) was carried out following the reaction scheme below:

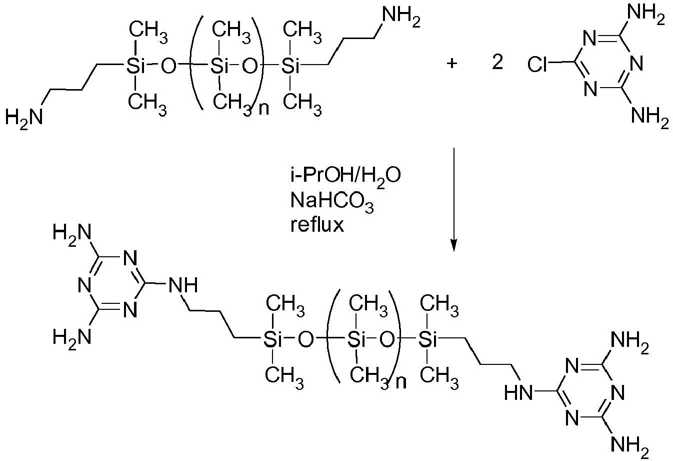

In a 500 ml round bottomed flask, 99.9 g (33.3 mmol) of PDMS-diamine (DMS-A15) were dissolved in 200 ml of 2-propanol. Then 12.20 g (83.8 mmol) of 2-Chloro-4,6-diamino-1,3,5-triazine were added, followed by the addition of 200 ml of an aqueous solution containing 15 g of sodium bicarbonate. The reaction mixture was stirred at 85 °C for 24 hours. After cooling, the reaction mixture was concentrated under vacuum and the product extracted with 3 X 150 ml of toluene. The combined organic phase was washed with water and dried over anhydrous sodium sulfate. The suspension was filtered through celite using a sintered funnel and the filtrate was concentrated and dried under vacuum to give the desired product as viscous liquid in 83% yield.

¹H NMR (400 MHz, CDCl³): δ 5.22-5.12 (br m, 10H), 3.30-3.25 (m, 4H), 1.53 (quint, 4H, J=8Hz), 0.54-0.50 (m, 4H), 0.05 (m, 240H).

¹³C NMR (100 MHz, CDCl₃): 167.7, 167.3, 166.8, 43.9, 23.8, 15.6, 1.6, 1.4, 1.3, 0.9,0.3.

The ratio of the integration of the ¹H NMR signal assigned to protons of CH₃-Si groups at 0.05 ppm (240H) with the integration of the ¹H NMR broad multiplet signal assigned to protons of -NH₂ and-NH- groups of at 5.22-5.12 ppm (10H) allows to determine the value of n in the formula proposed on the reaction scheme above i.e. n = 38. This value is confirmed when considering the integration of the ¹H NMR quintuplet signal assigned to protons of central -CH₂-group of -CH₂-**CH₂**-CH₂- at 1.53 ppm (4H) and the ¹H NMR signal assigned to protons of CH₃-Si groups.

### Synthesis of benzyl 2-(2,4,6-trioxo-1,3,5-triazinan-1-yl)acetate

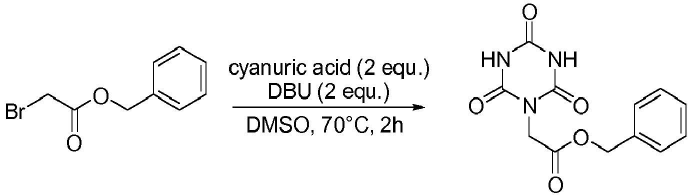

To a 3L double-jacketed glass reactor equipped with a condenser, a mechanical stirrer with four inclined blades, and a temperature probe were added under inert atmosphere 166.5 g (1.29 mol, 2 equ.) of cyanuric acid, 1120 g of dimethylsulfoxide and 196.4 g (1.29 mol, 2 equ.) of 1,8-diazabicyclo[5.4.0]undec-7-ene (DBU). The suspension was heated to 70 °C and stirred at this temperature until complete dissolution. Then 147.75 g (0.645 mol, 1 equ.) of benzyl-2-bromoacetate were added dropwise over 15 minutes and the reaction mixture was stirred at 70 °C for 2 hours. After cooling to 15 °C, 1000 g of water were added to precipitate the excess of cyanuric acid. The solid was filtered off and the filtrate was extracted with 4 X 950 g of ethyl acetate. The combined organic extracts were concentrated under reduced pressure to give an oily product which was precipitated by the addition of 200 g of water. The resulting solid was washed with water to remove residual amount of dimethylsulfoxide and dried at 75 °C under reduced pressure. The solid was finally washed with 3 X 1000g of dichloromethane and 2 X 500 g of toluene to remove the undesired di- and tri-substituted byproducts. After drying at 75 °C for 12 hours under reduced pressure, the expected monosubstituted product was obtained in 35% yield as a white powder.

¹H (400MHz, DMSO-d₆) δ 11.70 (s, 2H, NH), 7.34-7.39 (m, 5H, Ph), 5.19 (s, 2H, CH₂-Ph), 4.49 (s, 2H, N-CH₂);

¹³C (100MHz, DMSO-d₆) δ 167.56, 149.41, 148.29, 135.47, 128.40, 128.14, 127.85, 66.45, 41.54.

### Synthesis of isocyanuric-monoacetic acid

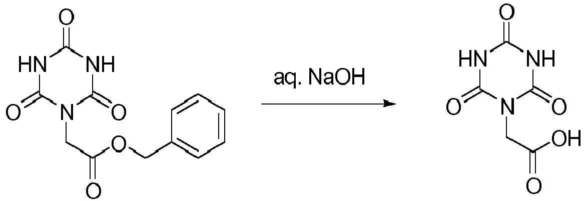

5g (18 mmol) of benzyl 2-(2,4,6-trioxo-1,3,5-triazinan-1-yl)acetate were dissolved in an aqueous solution containing 3.6 g of sodium hydroxide in 150 ml of water. The reaction mixture was stirred overnight at room temperature before being acidified to pH ∼1 by the addition of 6N HCl. After concentration by removing water under reduced pressure a precipitate appeared. Then THF was added and the mixture was stirred to extract the product into organic phase. The combined organic phase was dried over anhydrous sodium sulfate and filtered. The filtrate was concentrated and dried under reduced pressure to give isocyanuric-monoacetic acid in quantitative yield.

¹H NMR (400 MHz, DMSO-d₆): δ ppm: 11.68 (s, 2H), 4.31 (s, 2H).

### Preparation of ICA-PDMS3000-ICA

The telechelic end-grafting of PDMS chains by isocyanuric acid moiety (ICA) was carried out following the reaction scheme below:

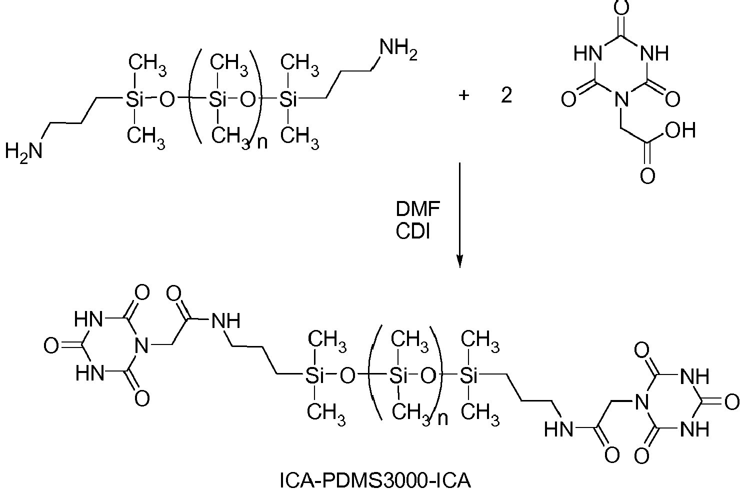

3.18 g (17 mmol) of isocyanuric-monoacetic acid were dissolved in 50 ml of DMF. Then, 2.76 g (17 mmol) of carbonyldiimidazole (CDI) were added and the reaction mixture was stirred for 30 minutes at room temperature. 21 g (7 mmol) of PDMS-diamine (DMS-A15) were added and the reaction mixture was stirred overnight at room temperature before being diluted with 150 ml of 1:1 (vol. :vol) ethylacetate/dichloromethane. The organic phase was washed with water and with a 5 wt. % aqueous solution of LiCl. The organic phase was dried over anhydrous sodium sulfate and filtered through celite using a sintered funnel. The filtrate was concentrated and dried under vacuum to give the desired product in 89% yield.

¹H NMR (400 MHz, CDCl₃): δ 7.85 (br m, 2H), 4.45 (s, 4H), 3.21 (m, 4H), 1.55 (m, 4H), 0.59 (m, 4H), 0.06 (m, 240).

The ratio of the integration of the ¹H NMR signal assigned to protons of CH₃-Si groups at 0.06 ppm (240H) with the integration of the ¹H NMR singulet signal assigned to protons of -CH₂- group of -(C=O)**CH₂**-N at 4.45 ppm (4H) allows to determine the value of n in the formula proposed on the reaction scheme above i.e. n = 38. This value is confirmed when considering the integration of the ¹H NMR multiplet signal assigned to protons of central -CH₂- group of -CH₂-**CH₂**-CH₂- at 1.55 ppm (4H) and the ¹H NMR signal assigned to protons of CH₃-Si groups.

### Preparation of ICA-PP02000-ICA

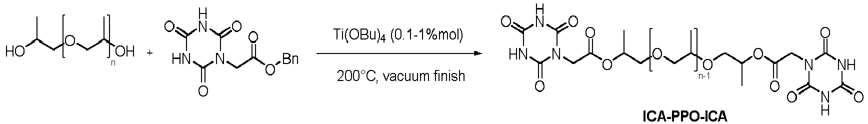

To a 50 mL glass reactor equipped with anchor stirrer were added under nitrogen flush OH-PPO-OH (10 mmol) (Mn 2000 g/mol), benzyl 2-(2,4,6-trioxo-1,3,5-triazinan-1-yl)acetate (20 mmol) and titanium butoxide (0.25wt%). Slow stirring was started and the reactor was immersed in the Wood's alloy bath previously heated at 210°C. These conditions were maintained at atmospheric pressure during 2 h. Then vacuum pump is started and the pressure is slowly decreased to 4 mbar. The conditions are maintained during 4.5 h to improve the conversion. The material was obtained in quantitative yields with a conversion of 85%.

NMR profile of ICA-PP02000-ICA:
¹H NMR (400MHz, DMSO-*d₆*) δ 11.70 (s, 4H, NH), 4.94 (m, 2H, CHCH₃), 4.40 (s, 4H, NCH₂), 3.60-3.30 (m, 112H, CH+CH₂ PPO), 1.16 (d, 6H, CH₃CH), 1.06-1.04 (m, 105H, CH₃ PPO).

### Preparation of supramolecular materials

The supramolecular materials were prepared by solution casting using a methanol/chloroform mixture as the solvent.

Accordingly, a blend comprising DAT-PDMS3000-DAT and ICA-PDMS3000-ICA in 1/1 molar ratio was prepared as follows:
2.57 g (0.8 mmol) of DAT-PDMS3000-DAT were dissolved under stirring for 30 minutes at 25 °C in 10 ml of a mixture composed of 10 wt. % of methanol and 90 wt. % of chloroform to give a solution (A). In paralell, 2.67 g (0.8 mmol) of ICA-PDMS3000-ICA were dissolved under stirring for 30 minutes at 25 °C in 10 ml of a mixture composed of 10 wt. % of methanol and 90 wt. % of chloroform to give a solution (B). Solutions A and B were mixed together and stirred for 30 minutes at 25 °C to give a new solution (C). The solution (C) was concentrated to dryness under reduced pressure leading to a solid supramolecular material that was ready for rheological characterization.

A blend comprising DAT-PDMS3000-DAT and THY-PDMS3000-THY in 1/1 molar ratio was prepared in a similar way.

A blend comprising DAT-PDMS3000-DAT and ICA-PP02000-ICA in 1/1 molar ratio was prepared as follows:
In a 250 mL flask with a magnetic stirrer were added 7.38 g of DAT-PDMS3000-DAT (2.3 mmol) and 40 mL of chloroform. The mixture was stirred at 25°C for 0.5 h. To this colorless mixture was added a solution of 5.28 g of ICA-PP02000-ICA (2.3 mmol) in 50 mL of chloroform. An increase of the viscosity was observed; the resulting syrup was stirred for 0.5 h at 25°C. The solution of the supramolecular material was concentrated to dryness under reduced pressure leading to a solid residue that was ready for rheological or mechanical characterization.

### Rheological properties

In Table 1 are reported the rheological properties of compositions according to the invention or of control compositions which were prepared as described hereabove.

**Table 1**

| Composition | Molar ratio | Cross-over point T_{C-O} (°C) | Storage modulus G' at plateau's vicinity (Mpa) | Broadness of rubbery plateau (°C) |
|---|---|---|---|---|
| Comparative 1 PDMS 140000 | n.a. | <<0 | n.a. | n.a. |
| Comparative 2 DAT-PDMS3000-DAT Thy-PDMS3000- Thy | 1:1 | 39 | 0.75 | n.a. |
| Example 1 DAT-PDMS3000-DAT ICA-PDMS3000- ICA | 1:1 | 195 | 0.7 | 305 |
| Example 2 DAT-PDMS3000-DAT ICA -PPO2000-ICA | 1:1 | 80 | 0.6 | 190 |

| | | | | |
|---|---|---|---|---|
| (*) non supramolecular reference: high molecular weight PDMS (140000 g/mol) from Wacker (AK 1000000 silicon oil). Rheology data taken from: Kökuti et al. Inter. J. Eng. 2011, 2, 177. | | | | |

The cross-over point (°C) was determined on the temperature sweep curve at the temperature where the curve representing modulus G' and the curve representing modulus G" cross. It denotes the temperature at which the physical crosslinkers (which assume the cohesion of the system) dissociate.

Broadeness of Rubbery Plateau (°C) is measured on the temperature sweep curve and covers the range of temperatures comprised between the glass transition temperature (Tg) and the temperature of dissociation T_{C-O} (cross-over point).

It appears from the results reported in Table 1 that supramolecular interactions through hydrogen bonding in the examples of compositions according to the invention is responsible for the improvement of the rheological properties of low Tg materials such as polysiloxanes, in particular such as DAT-PDMS-DAT. Indeed, while the reference PDMS of comparative example 1 has the viscosity of water at room temperature, the composition of DAT-PDMS-DAT with ICA-PDMS-ICA of example 1 demonstrates a high cohesive reinforcement due to hydrogen bonding up to temperatures surprisingly as high as 195 °C. Moreover, the reversible nature of the hydrogen bondings responsible for these performances makes these materials advantageously reprocesssable like thermoplastic materials. The composition of example 1 also provides a very high viscoelastic behavior with a η* = 2.10⁵ Pa.s at 150°C.

The composition of DAT-PDMS-DAT with ICA-PPO-ICA of example 2 demonstrates also a high cohesive reinforcement due to hydrogen bonding but up to a temperature surprisingly of 80 °C which is still higher than for comparative example 2.

Since the storage modulus of the composition of example 1 (0.7 Mpa) is very close to the modulus of the composition of example 2 (0.6 Mpa), the inventors have demonstrated thereby that the range of temperature of use, illustrated by the cross over temperature, of a composition comprising DAT-PDMS-DAT and at least one polymer having a glass transition temperature below 0 °C and comprising at least 2 cyanuric acid moieties can surprisingly be tune by changing the nature of said polymer without severly altering mechanical properties. Besides, the supramolecular interactions through hydrogen bonding in compositions containing DAT-PDMS-DAT and THY-PDMS-THY (see comparative example 2) are also responsible for an improvement of the rheological properties of the material, but the temperature of dissociation of the assembly (cross-over) is observed at lower temperature, i.e. at a temperature of roughtly 40 °C, thus allowing tighter range of temperature of use than for materials obtained from compositions according to the invention. Since changing the nature of functional groups from ICA to THY in polysiloxane backbone is also a way to tune the range of temperature of use of the resulting material, the inventors have found an alternative to the use of generally expensive functional groups.

## Claims

1. A thermoplastic composition comprising :
- at least one polysiloxane (P1) chosen from polysiloxanes corresponding to formula (A) and polysiloxanes corresponding to formula (B), with formulae (A) and (B) as represented hereinafter : 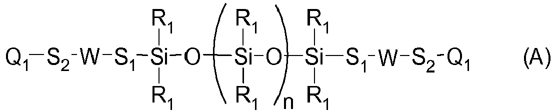 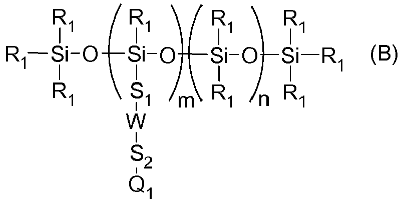
wherein each R₁ is independently selected from C₁-C₂₀ hydrocarbyl groups optionally substituted by a perfluoroalkyl group and,
wherein S₁ and S₂ which may be the same or different are nil or C₁-C₄₀ hydrocarbylene groups optionally interrupted by one or more heteroatoms or heteroatom-containing groups chosen from the list consisting of -O-, -S-, - (C=O)-, -(C=S)-,-CO-NH-, -NH-CO-O- and -NH-CO-NH-,
wherein W is a divalent group selected from the list consisting of -NH-, -NR-,-CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O-, -*O(C=O)-, -*NH-CO-O-, -NH-CO-O*- and -NH-CO-NH- wherein the atom designed with * is linked to S₁ and wherein R is a C₁-C₈ alkyl group,
wherein Q₁ is a diaminotriazine moiety corresponding to formula (C): 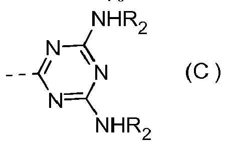
wherein R₂ is independently H or a C₁-C₂₀ hydrocarbyl group or a -(C=O)-R' moiety with R' being a C₁-C₂₀ hydrocarbyl group,
wherein n is an integer ranging from 5 to 4000 and,
wherein m is an integer such as the ratio n/m is ranging from 500 to 2, and
- at least one polymer (P2) having a glass transition temperature, measured by differential scanning calorimetry, lower than 0 °C,
said polymer (P2) being a polymer functionalized with at least two isocyanuric or barbituric acid moieties corresponding to formula (D): 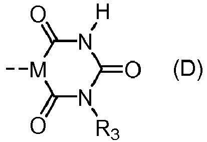
wherein 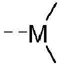 is 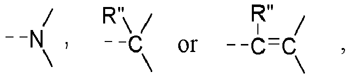
wherein R" is H or a C₁-C₈ alkyl group and,
wherein R₃ is H or a C₁-C₂₀ hydrocarbyl group or a -(C=O)-R"' moiety with R'" being a C₁-C₂₀ hydrocarbyl group.

2. The thermoplastic composition according to claim 1 wherein R₁ is a methyl group.

3. The thermoplastic composition according to any one of the preceding claims wherein the polysiloxane (P1) corresponds to formula (A).

4. The thermoplastic composition according to any one of the preceding claims wherein the polymer (P2) is chosen from polysiloxanes corresponding to formula (E) and polysiloxanes corresponding to formula (F), with formulae (E) and (F) as represented hereinafter : 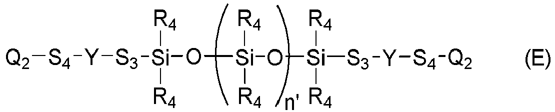 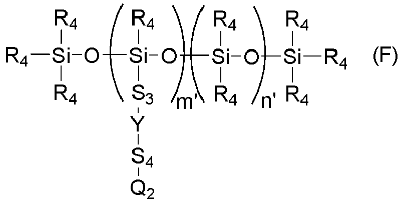
wherein each R₄ is independently selected from C₁-C₂₀ hydrocarbyl groups optionally substituted by a perfluoroalkyl group, and
wherein S₃ and S₄ which may be the same or different are nil or a C₁-C₄₀ hydrocarbylene groups optionally interrupted by one or more heteroatoms or heteroatom-containing groups chosen from the list consisting of -O-, -S-,-(C=O)-, -(C=S)-,-CO-NH-, -NH-CO-O- and -NH-CO-NH-, and
wherein Y is a divalent group selected from the list consisting of -CH₂-CH₂-, -*S-CH₂-CH₂-, -*CH₂-CH₂-S-, -*NH(C=O)-, -(*C=O)NH-, -*NR(C=O)-,-(*C=O)NR-, -(*C=O)O-, *O(C=O)-, -*NH-CO-O-, -NH-CO-O*- and -NH-CO-NH- wherein the atom designed with * is linked to S₃ and wherein R is a C₁-C₈ alkyl group and,
wherein n' is an integer ranging from 5 to 4000, and
wherein m' is an integer such as the ratio n'/m' is ranging from 500 to 2, and
wherein Q₂ is an isocyanuric or a barbituric acid moiety corresponding to formula (D): 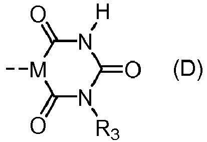
wherein 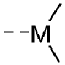 is 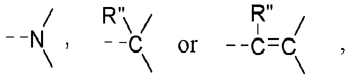
wherein R" is H or a C₁-C₈ alkyl group and,
wherein R₃ is H or a C₁-C₂₀ hydrocarbyl group or a -(C=O)-R"' moiety with R'" being a C₁-C₂₀ hydrocarbyl group.

5. The thermoplastic composition according to claim 4 wherein R₄ is a methyl group.

6. The thermoplastic composition according to claim 4 or 5 wherein the polysiloxane (P2) corresponds to formula (E).

7. The thermoplastic composition according to any one of claims 1 to 3 wherein the polymer (P2) is chosen from polyalkylene oxide-based polymers functionalized at both ends with an isocyanuric acid moiety and/or a barbituric acid moiety.

8. The thermoplastic composition according to claim 7, wherein polyalkylene oxide-based polymer functionalized at both ends (P2) mays correspond to formula (G) as represented hereinafter: 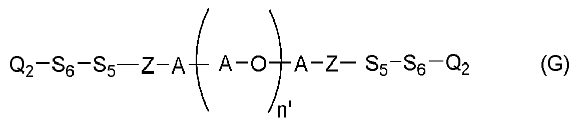 wherein
- A is an alkanediyl group, O is oxygen;
- S₅ and S₆ which may be the same or different are nil or a C₁-C₂₀ hydrocarbylene groups optionally interrupted by one or more heteroatoms or heteroatom-containing groups chosen from the list consisting of -O-, -S-,-(C=O)-, -(C=S)-, -CO-NH-,-COO-, -NH-CO-NH-, -NH-COO-;
- Z is a divalent group selected from the list consisting of -*CH₂-NH-, -*NH-CH₂-, -*CH₂-NR-, -*NR-CH₂-, -*CH₂-O-, -*O-CH₂-, -*CH₂-S-, -*S-CH₂-, -*S-CH₂-CH₂-, -*CH₂-CH₂-S-, -*NH(C=O)-, -(*C=O)NH-, -*NR(C=O)-,-(*C=O)NR-, -(*C=O)O-, -*O(C=O)-, -NH-CO-NH- and -NH-COO- wherein the atom designed with * is linked to S₁, and R is independently H or a C₁-C₂₀ hydrocarbyl group, such as notably a methyl, ethyl, propyl, benzyl, triphenylmethyl, or a benzylidene group;
- Q₂ is an isocyanuric acid moiety or a barbituric acid moiety; and
- n' is an integer ranging from 2 and 800, preferably from 4 to 600, more preferably from 6 to 400.

9. The thermoplastic composition according to any one of the preceding claims, wherein the molar ratio between the at least one polysiloxane (P1) and the at least one polymer (P2) is adjusted in such a way that the molar ratio between the diaminotriazine moieties and the cyanuric or barbituric acid moieties ranges from 0.25 to 4.0.

10. A process for preparing the thermoplastic composition according to any one of the preceding claims, said process comprising the steps of:
- providing a mixture (M1) comprising the polysiloxane (P1) and a liquid L₁,
- providing a mixture (M2) comprising the polymer (P2) and a liquid L₂,
- mixing the mixture (M1) with the mixture (M2) under stirring so as to obtain a mixture (M3).

11. The process according to claim 10, which further comprises removing the liquids L₁ and L₂ from the mixture (M3).

12. A process for preparing the thermoplastic composition according to any one of claims 1 to 9, said process comprising the steps of:
- preparing under stirring and heating up to a temperature T a mixture (M) comprising the polysiloxane (P1) and the polymer (P2),
- cooling the mixture to a temperature ranging from Tg1 to 50 °C so as to obtain the thermoplastic composition as a solid,
wherein T is ranging from (T_{C-O} - 50°C) to (T_{C-O} + 50°C) with T_{C-O} being the temperature of the cross-over point of the composition determined by rheological measurements and Tg1 is the glass transition temperature of the polysiloxane (P1) measured by differential scanning calorimetry (DSC).

13. A coating comprising the thermoplastic composition according to any one of claims 1 to 9 or prepared by the process according to any one of claims 10 to 12.

14. Use of the thermoplastic composition according to any one of claims 1 to 9 or prepared by the process according to any one of claims 10 to 12 for preventing or reducing ice formation on the coating of claim 13.

15. Use of the thermoplastic composition according to any one of claims 1 to 9 or prepared by the process according to any one of claims 10 to 12 or use according to claim 14 for causing self-healing of the coating of claim 13 after the coating has been damaged.
